Europäisches Patentamt

**European Patent Office**

**Office européen des brevets**

(19)

(11) Veröffentlichungsnummer: **0 071 693**
A2

(12) # EUROPÄISCHE PATENTANMELDUNG

(21) Anmeldenummer: **82100123.7**

(51) Int. Cl.³: **B 68 G 7/05**

(22) Anmeldetag: **11.01.82**

(30) Priorität: **10.08.81 DE 3131634**

(71) Anmelder: **Martin, Friedrich, Hauptstrasse 25, D-7271 Nagold-Iselshausen (DE)**

(43) Veröffentlichungstag der Anmeldung: **16.02.83 Patentblatt 83/7**

(72) Erfinder: **Martin, Friedrich, Hauptstrasse 25, D-7271 Nagold-Iselshausen (DE)**

(74) Vertreter: **Otte, Peter, Dipl.-Ing., Tiroler Strasse 15, D-7250 Leonberg (DE)**

(84) Benannte Vertragsstaaten: **AT BE CH FR GB IT LI NL SE**

(54) Verfahren und Vorrichtung zum automatischen Beziehen und Polstern von Stuhlsitzen u. dgl.

(57) Verfahren und Vorrichtung zum automatischen Polstern von Stuhlsitzen u. dgl., wobei zum Spannen der Randkante des auf den Sitzträger mit Polster aufgelegten Bezugsstoffes eine Ringbürste über den Sitzträger geführt ist, die nach unten in dem Moment weitergleitet, in welchem von oben eine Form mit Fixiermitteln den vorgespannten Bezugsstoff-Randbereich erfaßt und fixiert. Form mit Sitzträger sind drehbar und werden von einer stationären Schnellschußeinrichtung angetrieben, wobei die Bezugsstoff-Randkante am Sitzträger angeschossen und überschüssiger Stoff abgeschnitten wird.

EP 0 071 693 A2

**Dipl.-Ing. Peter Otte**
Patentanwalt

7250 Leonberg 0071693
Tiroler Straße 15
Telefon (07152) 45421 u.44442

1608/ot/mü
21.12.1981

Herr Friedrich Martin, 7271 Nagold-Iselshausen

Verfahren und Vorrichtung zum automatischen Beziehen und
Polstern von Stuhlsitzen u. dgl.

## Stand der Technik

Die Erfindung geht aus von einem Verfahren nach der Gattung
des Hauptanspruchs und einer Vorrichtung nach der Gattung des
ersten Vorrichtungsanspruchs.

Das Polstern, also das unter ständigem, gleichzeitigem Spannen
vorzunehmende Befestigen von Polster-Bezugsstoffen auf einer
Unterlage, gegebenenfalls unter Zwischenlegung eines elastischen
Polsterteils, beispielsweise eines Schaumstoffkissens, von aus
Federn gebildeten Polsterelementen u. dgl., wird auch heute
sehr häufig in wesentlichen Bereichen rein manuell durchgeführt.
Beim Polstern muß nämlich ständig gegen die Spannung der
elastischen Zwischenlage gearbeitet und dabei der Polster-Bezugsstoff faltenfrei und sauber angeordnet und unter Spannung

/2

befestigt werden. Dabei wird der Bezugsstoff zunächst gehalten und anschließend befestigt, häufig mit Hilfe eines automatischen, mittels Druckluft oder elektrisch angetriebenen Naglers, Schießapparat oder, wie er im folgenden nur noch genannt werden soll, Tackers. Es ist auch möglich, bei einer aus ästhetischen Gründen sichtbar bleibenden Nagelung Polsternägel zu verwenden und diese von Hand oder mit einem Automatiknagler einzunageln.

Aus der DE-OS 29 52 772 des gleichen Anmelders ist ein Verfahren und eine Vorrichtung zum automatischen Rundumpolstern von Stuhlsitzen u. dgl. bekanntgeworden, wobei der Bezugsstoff auf den Träger und die auf diesem gegebenenfalls vorbefestigte Zwischenlage aufgelegt und der überstehende Bezugsstoffrand dann in separate, längs des gesamten Trägerumfangs verteilt angeordnete und Mittel zur Erfassung und Einspannung des Randes aufweisende Spannelemente, nämlich üblicherweise Spannschnäbel eingeführt und von diesen gehalten wird. Anschließend wird dann eine Relativbewegung zwischen den Spannschnäbeln und dem Träger durchgeführt, wobei diese sich voneinander entfernen und dadurch der Bezugsstoffrand auf allen Seiten gleichzeitig über den Träger gezogen und gespannt wird; schließlich wird der Bezugsstoffrand dann in dieser Stellung so lange festgehalten, bis durch eine Relativverschiebung zwischen dem insoweit vorgespannten und gepolsterten Teil zusammen mit den Spannelementen einerseits sowie einem Tacker andererseits der Bezugsstoffrand am Träger angeschossen werden kann.

Der vorliegenden Erfindung liegt die Aufgabe zugrunde, die genannten automatischen Polstervorgänge von Trägern allgemein,
die beispielsweise Stuhlsitze, Rückenlehnen, Sessel, flächige
Teile, Paneele o.dgl. sein können, dadurch zu optimieren, daß
sich ein besonders gleichmäßiger Spannvorgang und eine einwandfreie Befestigung, im besonderen ein problemloses Einschließen
von Tackernägel- oder -klammern ergibt.

Vorteile der Erfindung

Das erfindungsgemäße Verfahren zum automatischen Polstern
und Beziehen sowie die erfindungsgemäße Vorrichtung, die dieses
Verfahren durchführt, lösen diese Aufgabe jeweils mit den kennzeichnenden Merkmalen des Hauptanspruchs bzw. des ersten Vorrichtungsanspruchs und haben gegenüber den bisherigen Möglichkeiten den Vorteil, daß ohne manuellen Eingriff, der stets von der
Geschicklichkeit der Bedienungsperson abhängig ist, ein schneller,
besonders akkurater und hochpräziser Spann- und Vorfixiervorgang
des Bezugsstoffes auf dem Träger, auch unter Zwischenlegung einer
Polsterlage, möglich ist.

Durch die gleichmäßige Einwirkung der Bürsten, deren Reibungsbeiwert durch entsprechende Materialauswahl je nach Wunsch ein
gestellt werden kann, ergibt sich eine besonders genaue und vor
allem auch wiederholbare Bezugs- und Polsterqualität, wie dies
manuell praktisch nicht erreicht werden kann, obwohl gerade das
Polstern einen besonders schwierigen Verfahrensablauf bei der
Bearbeitung umfaßt und daher bis heute automatische Polstersysteme nicht bekannt sind. Tatsächlich werden bis heute für die Polsterung hochqualifizierte Arbeitskräfte benötigt, um einen mit einem Polster- und Bezugsstoff versehenen Träger adrett und faltenfrei aussehen zu lassen und insbesondere auch die Polsterqualität bei häufigem Gebrauch aufrecht zu erhalten.

Besonders vorteilhaft ist bei vorliegender Erfindung noch die Möglichkeit, nunmehr einen Polstervorgang absolut vollautomatisch ablaufen zu lassen, auch in Erweiterung dahingehend, daß der Bezugsstoff intermittierend automatisch zugeführt wird, so daß aufeinanderfolgend gleiche und unterschiedliche Trägerformate bezogen und bepolstert werden können. Da es der Erfindung gelingt, gerade die handwerklich sehr schwierigen Bereiche beim Polstern, nämlich das Spannen und Vorfixieren sowie Anschießen, im vollautomatischen Ablauf durchzuführen, ist es jetzt auch möglich, durch zusätzliche Anordnung von bei automatischen Maschinen bisher schon für sich gesehen bekannten Greiferelementen, Klauen und Austauscheinrichtungen den gesamten Polstervorgang einer Vielzahl von zu beziehenden Trägern automatisch durchzuführen, wobei der Bezugsstoff von einer Rolle abgezogen und entsprechend automatisch zugeschnitten lediglich auf den Träger aufzulegen ist, was ohne menschliches Zutun möglich ist.

Weitere Ausgestaltungen der Erfindung sind Gegenstand der Unteransprüche und in diesen niedergelegt. Durch Aufteilung und Zuordnung verschiedener Arbeitsabläufe an verschiedenen, aber an der gleichen Maschine vorhandenen Arbeitsteilkomponenten können diese jeweiligen Teilarbeiten besonders einwandfrei und sorgfältig durchgeführt werden, wobei der gesamte Arbeitsablauf mit hoher Geschwindigkeit und präzise erfolgt. Dabei kommt es insbesondere darauf an, die manuellen Eingriffe einer Bedienungsperson für die Maschine auf ein Minimum zu begrenzen, beim vorliegenden Fall auf das paßgerechte Einlegen des zugeschnittenen Bezugsstoffs an vorgegebenen Markierungen eines zusätzlichen Auflagetisches, woraufhin dann der gesamte Polster- und Nagelvorgang nach Auslösung durch die Bedienungsperson vollautomatisch abläuft und der fertig bezogene und bepolsterte Sitz schließlich automatisch ausgeworfen wird.

Vorteilhaft ist ferner bei vorliegender Erfindung das gleichmäßige Vorspannen und Bepolstern des Trägers mit zwischengelegter elastischer Auflage durch die gleichmäßige Spannwirkung der Borstenbündel der Ringbürste und das Festhalten und Fixieren des so erreichten Spannvorgangs durch eine von oben auf die Einheit Träger/Polsterlage/gespannter Polster-Bezugsstoff herunterfahrende Formschale, wobei gleichzeitig die den Polsterbeziehvorgang eigentlich durchführende Ringbürste nach unten abgezogen wird und von dem Träger vollständig freikommt. Dabei kann die Formschale so ausgebildet sein, daß sie den nunmehr gespannten Bezugsstoffrand mit einem Vertikalflansch fixiert, der über die Randkante des bezogenen Trägers reicht und sich nach unten erstreckt, wobei dieser Ringflansch dann wieder nach innen gerichtete Borsten oder Fixierelemente aufweisen kann, die durch die radial von innen aufgebrachte Preßwirkung die Gesamteinheit aus Formschale, gespanntem Bezugsstoff, Polsterzwischenlage und Träger als Einheit festhalten. Der automatische Polstervorgang kann hier abgebrochen werden, um die Einheit mit gespanntem Bezugsstoff zu entnehmen oder durch eine geeignete Dreh- und Schwenkeinrichtung den Aufnahmeteller oder die Trägerplatte für den Träger zusammen mit der aufgesetzten Form abzuschwenken und dann die Bezugsstoff-Randkante mittels eines Handtackers manuell abzunageln und nachfolgend auch zu beschneiden. Hierdurch ergibt sich ein Halbautomat bei gleichzeitigem Vorteil einer kostengünstigeren Herstellung infolge Wegfalls der relativ aufwendigen Tackerführungsmechanik und -steuerung.

Wünscht man einen Vollautomat, dann läßt sich nach dem Aufbringen der Formschale die Einheit aus dieser, dem Träger, dem gespannten Bezugsstoff und der Polsterzwischenlage in eine Drehbewegung versetzen, so daß ein auf die Unterseite oder die noch freie Randkante des Trägers gerichteter Tacker in entsprechender, synchronisierter Schußabfolge den Bezugsstoffrand endgültig befestigt und dabei gleichzeitig auch beschneidet.

In einer vorteilhaften Ausgestaltung vorliegender Erfindung orientiert sich dabei der Tacker bei seinem relativen Umlauf um die erwähnte Gesamteinheit an einem Richtflansch, der radial nach außen an der Formschale angebracht ist und vom Tacker aus mittels Führungs- und Antriebsrollen erfaßt wird.

In einer weiteren Ausgestaltung vorliegender Erfindung laufen mit dem Mündungsbereich des Tackers und in entsprechender Weise verteilt angeordnet Luftblasdüsen mit, die soweit dies erforderlich ist, die Bezugsstoffrandkante nach unten innen umschlagen, so daß der Tacker die Randkante einwandfrei benageln kann.

In einer weiteren vorteilhaften Ausgestaltung vorliegender Erfindung ist dabei die Tackerlagerung so ausgebildet, daß sie mindestens fünf Freiheitsgrade aufweist und den Tacker seitlich am bisher beschriebenen System für den Spann- und Haltevorgang positioniert.

Durch die Erfindung gelingt die vollautomatische Polsterung, wobei ergänzend hierzu auch noch die intermittierende Zuführung des Bezugsstoffes und dessen Zuschneiden ins Auge gefaßt werden kann. Die Erfindung ist gerade in den sehr schwierigen Bereichen eines Polstervorgangs besonders wirkungsvoll einzusetzen, wo bisher ausgesprochene Fachkräfte erforderlich waren, nämlich im Polstern und Befestigen des Bezugsstoffes in Randbereichen, wo überschüssige Bezugsstoffteile durch Faltenbildung und sorgfältiges Einklappen beseitigt werden mußten. Die Erfindung erledigt durch die vollkommen gleichmäßig einwirkende Bürst-Reib-Bespannung auch schwierige Eck- und Kantenbereiche, die bei der Polsterung auftreten, vollkommen problemlos, wobei Faltenbildungen praktisch nicht auftreten, da durch den primären Bürst-Spannvorgang und das anschließende Halten und Festlegen mit Hilfe der Formschale, gegebenenfalls auch hier noch unter einer gewissen Bürst- oder Spannwirkung, der Stoff in diesen Kantenbereichen ganz allgemein zusammengedrängt oder gedehnt wird, ohne daß ausgeprägt eine Falte hierbei entstehen kann.

/8

Beim Schnellnagler ist vorteilhaft, daß dieser einerseits in der Lage ist, auch komplizierten Verschiebe- und Höhenschlagbewegungen des Trägers praktisch rückstellungsfrei zu folgen, andererseits aber genau in der Ausgangsposition festgehalten wird, in welche er sich im Moment des Abhebens vom Trägerrand nach Beendigung des umlaufenden Nagelvorgangs befindet. Dabei ist die Lagerung vereinfacht, komplizierte Federeinstellmechanismen sind nicht erforderlich und auch sehr schwere Schnellnagelapparate können sicher gehalten und geführt werden.

Weitere Ausgestaltungen der Erfindung sind Gegenstand der Unteransprüche und in diesen beschrieben.

Zeichnung

Ausführungsbeispiele der Erfindung sind in der Zeichnung dargestellt und werden in der nachfolgenden Beschreibung näher erläutert. Es zeigen:

Fig. 1　in perspektivischer Darstellung eine erste Ausführungsform der erfindungsgemäßen Polstervorrichtung,

Fig. 2　eine perspektivische Schrägdraufsicht im Ausschnitt auf die Bürsteinrichtung,

Fig. 3　eine schematisierte Darstellung des durch ein Ausführungsbeispiel der Bürsteinrichtung bewirkten Spann- und Fixiervorgangs des Bezugs, wobei die Bürsteinrichtung in zwei verschiedenen Positionen dargestellt ist,

Fig. 4　eine zweite Ausführungsform einer Bürsteinrichtung zur Bewirkung eines Spann- und Fixiervorgangs des Bezugsstoffs in vereinfachter, schematisierter Darstellung,

Fig. 5  in einer schematisierten Seitenansicht eine Einwirkungsmöglichkeit des Führungsrollensystems der Schnellnaglereinrichtung beim Umlauf um den auf einem Tisch gehaltenen Träger,

Fig. 6  die Einwirkung der Schnellnageleinrichtung auf den Trägerrand entsprechend der Darstellung der Fig. 5, jedoch in
einer Ansicht von oben,

Fig. 7  eine weitere mögliche Ausführungsform des Spann- und
Verbindungsvorgangs des Bezugsstoffs mit dem Träger,
wobei die endgültige Fixierung nicht durch Anschießen,
sondern durch einen Klebevorgang erfolgt,

die Fig. 8a und 8b
zeigen eine andere Ausführungsform einer Bürsteinrichtung, die in der Lage ist, ihr Format je nach den Abmessungen des zu beziehenden Trägers zu verändern,

Fig. 9  zeigt eine automatisierte Zuführung des Bezugsstoffes
zur Arbeitsstation Polsterung,

Fig. 10  eine Rückansicht einer ersten Ausführungsform der
Tackerlagerung,

Fig. 11  eine Ansicht des vorderen Lagerbereichs des Tackers

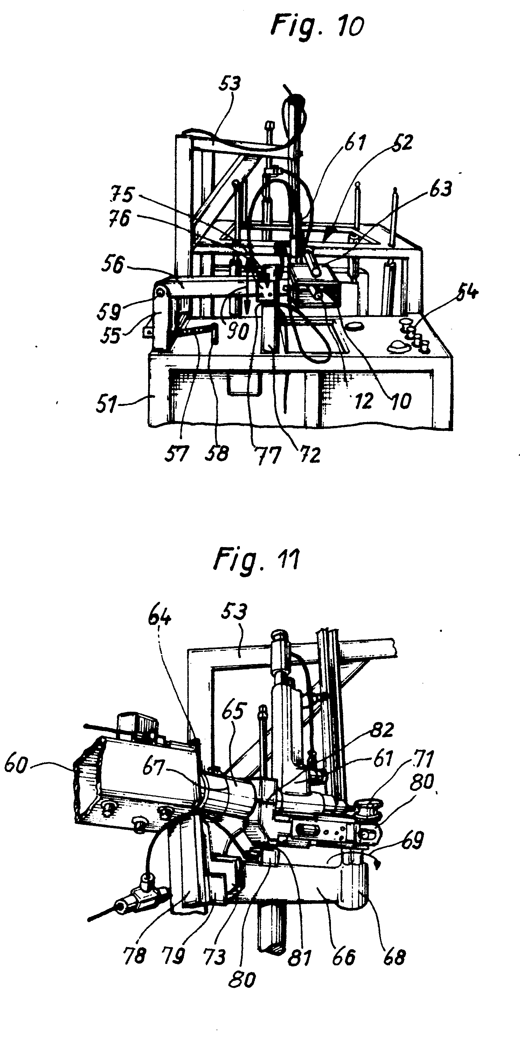

der Fig. 10 von der Seite,

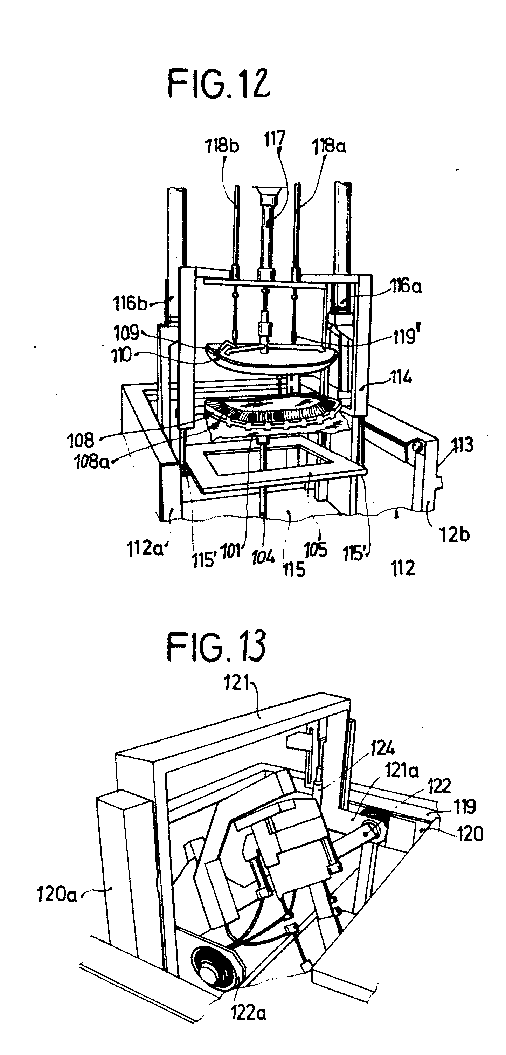

Fig. 12  eine perspektivische Gesamtdarstellung einer Variante
einer erfindungsgemäßen vollautomatischen Polstervorrichtung in perspektivischer Darstellung,

Fig. 13  in ebenfalls perspektivischer Darstellung den Nagelapparat oder Tacker, der seitlich neben - bezogen auf die
Darstellung der Fig. 12 hinter - den  Teilelementen zu

0071693

sehen ist, die den Bezieh- und Polstervorgang durchführen,

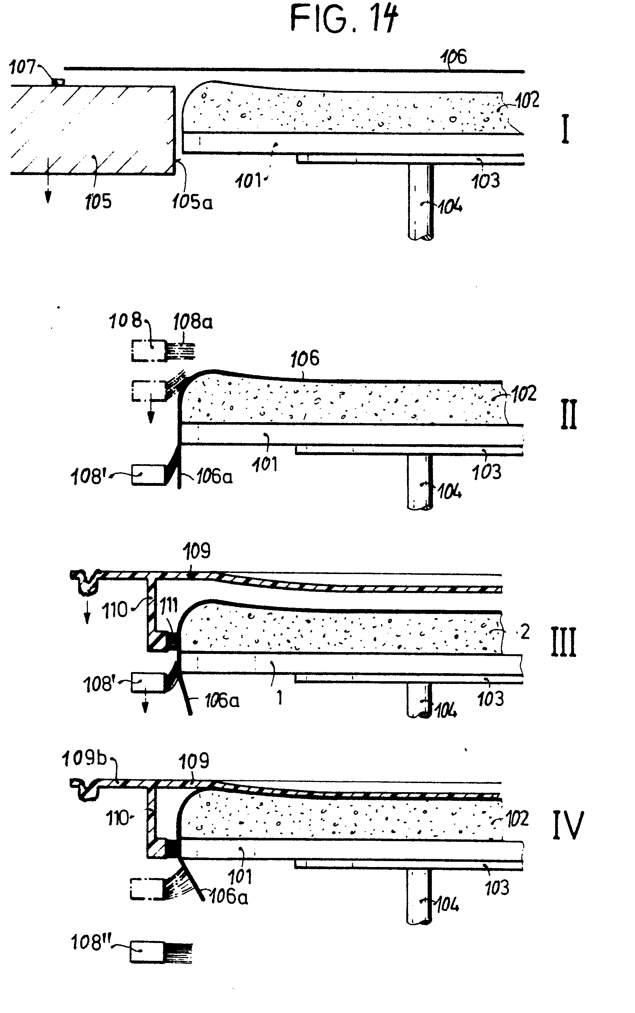

Fig. 14 in schematisch vereinfachter Darstellung Augenblickszustände des Polstervorgangs bei der Vorrichtung der
Fig. 12,

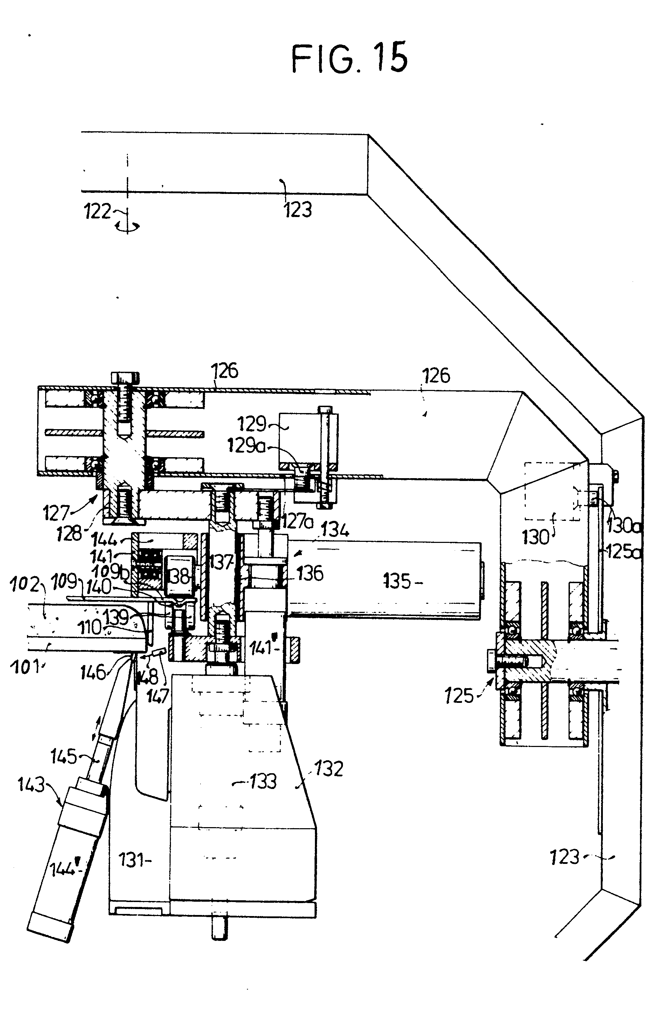

Fig. 15 in detaillierterer Darstellung die Aufhängung und Lagerung des Tackers mit mindestens fünf Freiheitsgraden,
damit dieser dem Verlauf der zu nagelnden Randkante
des Sitzes oder Trägers zu folgen vermag, und die

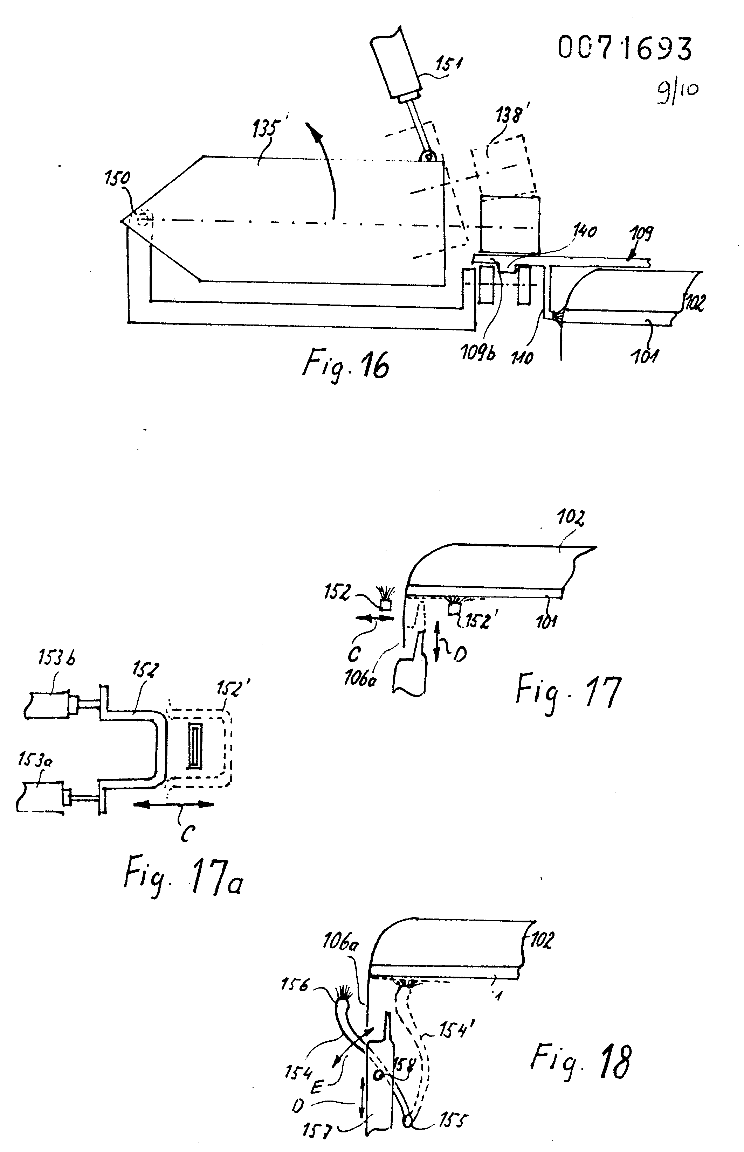

Fig. 16 bis 19 Ausführungsformen von Tackerführungen und Einstreicheinrichtungen für den Bezugsstoffrand.


Beschreibung der Ausführungsbeispiele


Der Grundgedanke vorliegender Erfindung besteht darin, bei einem
automatischen Polsterungsvorgang, bei welchem ein Bezugsstoff,
gegebenenfalls unter Zwischenlage eines Polsters o.dgl., auf
einen Träger unter Aufbringung einer gewissen Spannung aufgezogen und anschließend befestigt wird, den Spann- und einen Vorbefestigungsvorgang dadurch zu bewirken, daß im Randflächenbereich
des Bezugsstoffs eine durch einen Bürstvorgang hervorgerufene
Krafteinwirkung ausgeübt wird, die von oben, also vom späteren
Polsterrandbereich nach unten über die Trägerrandkante und gegebenenfalls noch weiter den Bezugsstoff nach innen arbeitet, um
ihn dort an geeigneten Halteelementen zu befestigen.


Dieser ganze Vorgang läuft vollautomatisch ab und greift ent-

/11

weder über den gesamten Umfang des beziehenden Trägers gleichzeitig an oder örtlich lokal an einer Stelle oder an mehreren Umfangssegmenten und führt zu dem verblüffenden Ergebnis, daß der Bezugsstoff in einer absolut einwandfreien, manuell gar nicht erreichbaren Genauigkeit und Präzision unter gewünschter Spannwirkung in sauberer Verteilung aufgezogen und befestigt, zunächst vorzugsweise vorfixiert wird. Der endgültige Befestigungsvorgang des Bezugsstoffs am Trägerrandbereich oder an der Trägerunterkante kann dann durch Anschießen mit einem Schnellnagler erfolgen, der vorzugsweise ebenfalls vollautomatisch arbeitet, so daß der gesamte Polstervorgang im schnellen Ablauf mit hoher Genauigkeit durchgeführt wird.

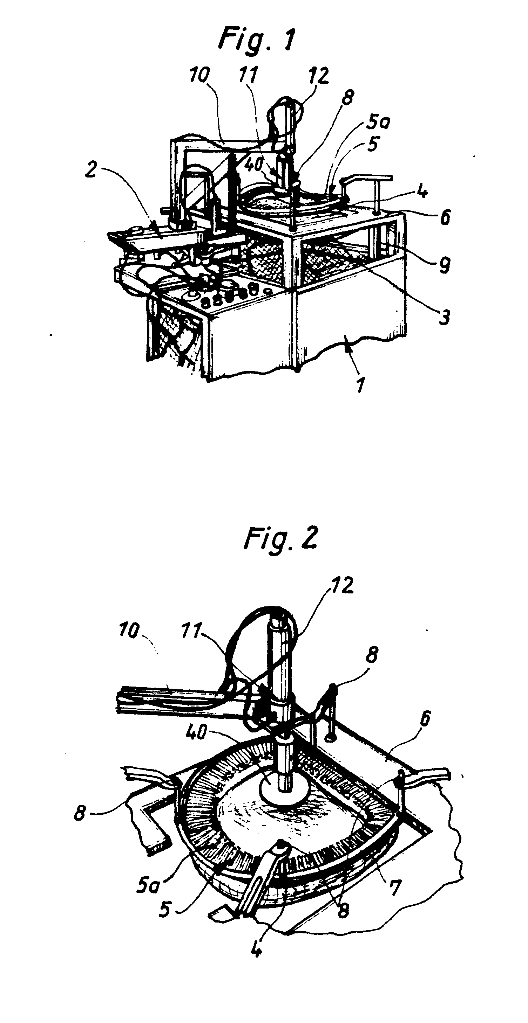

Die Darstellung der Fig. 1 zeigt eine mögliche Ausführungsform eines Bezugs- oder Polsterautomaten, bestehend aus einem Gestell 1, welches bei 2 den Schnellnagler lagert und über einen Drehtisch 3 verfügt, der den mit dem Bezugsstoff zu beziehenden, gegebenenfalls gleichzeitig zu polsternden Träger 4 aufnimmt und lagert und diesem eine Relativbewegung mit Bezug auf den Schnellnagler 2 verleiht. Es versteht sich, daß in kinematischer Umkehr auch der Tisch stationär gelagert sein kann, während der Schnellnagler eine Drehbewegung über den Umfang des Trägers durchführt, um so den Bezugsstoff an dessen Stirnrandkante oder dessen Unterkante in entsprechenden Abständen anzuschießen. Der Tisch 3 ist an einem zentralen, in der Darstellung der Fig. 1 nicht erkennbaren Drehrohr gelagert.

Bei dem zu beziehenden Träger kann es sich um jede beliebige Form eines zu beziehenden Elements handeln, also Stuhlsitze, flächige Teile, Paneele, Rückenlehnen, Sessel u.dgl., wobei in der Zeichnung zum besseren Verständnis ein Bürostuhlsitz ausgewählt ist. Dieser vorzugsweise aus Holz gewünschter, auch komplizierterer Form bestehende Träger wird auf den Tisch aufgelegt - gegebenenfalls unter Zwischenlage von Abstandhaltern, worauf weiter unten noch eingegangen wird -, und es kann dann auf den Träger der Polsterteil noch aufgelegt werden, wenn dieser sich nicht schon am Träger in geeigneter Form fixiert befindet. Es wird dann mit entsprechender Randzugabe auf Träger und Polster der Bezugsstoff aufgelegt - eine automatisierte Form wird weiter unten noch erläutert - und anschließend tritt eine automatische Spann- und Vorfixiereinrichtung in Wirkung, die im folgenden als Bürsteinrichtung bezeichnet wird. Diese Bürsteinrichtung 5 ist an einem Zusatzgestell 6 gelagert, und zwar vorzugsweise in vertikaler Richtung nach oben und unten verschiebbar. Alternativ ist es aber auch möglich, den jeweils zu beziehenden Träger mit Tisch zu verschieben, wie überhaupt die im folgenden erläuterten Bewegungen insgesamt als Relativbewegungen zu verstehen sind, wie ohne weiteres einzusehen, da hierdurch die Funktion der Erfindung nicht geändert wird.

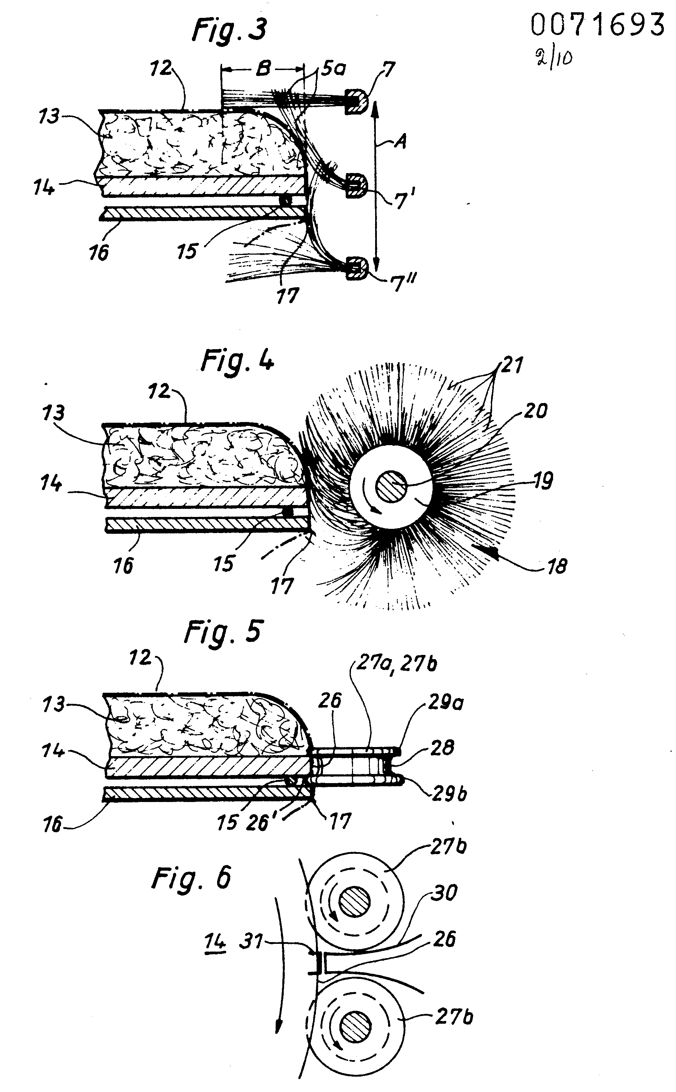

Bei dem in Fig. 1 dargestellten Ausführungsbeispiel besteht die Bürsteinrichtung aus einem geschlossenen, in ihrer Kontur etwa der Kontur des Trägers folgenden Ringbürste 5a mit nach innen gerichteten Borsten (s. auch die Detaildarstellung der Fig. 2). Die Ringbürste 5a umfaßt einen ringförmigen Borstenträger 7, der das durchlaufende geschlossene, nach innen gerichtete Borstenbündel in einer geeigneten Quetschspalte aufnimmt.
Die Ringbürste 5a ist zur Durchführung einer vertikalen Relativverschiebung mit Bezug auf den zu beziehenden Träger am Zusatzgestell 6 über nach innen gerichtete Träger 8 gelagert und gehalten, die mit den Kolbenstangen von Arbeitszylindern 9 (hydraulischer oder pneumatischer Art) verbunden sind, die die Ringbürste nach oben oder unten verschieben können. Der durch diese
bewegliche Lagerung mögliche Hub ist jedenfalls so ausgelegt,
daß die Ringbürste mit ihren nach innen gerichteten Borsten von
oberhalb des zu beziehenden Trägers und des auf ihn aufgelegten
Bezugsstoffs bis auf einen vorgegebenen Abstand unterhalb des
Trägers verfahrbar ist, wodurch sich ein mit Bezug auf das
Spannen und Vorfixieren überraschender Wirkungsmechanismus
ergibt. Die Spitzen der nach innen gerichteten Borsten erstrecken
sich auf jeden Fall um einen vorgegebenen Abstand bis über die
Oberfläche des zu beziehenden Trägers, wie dies weiter unten auch
in Verbindung mit dem Wirkungsmechanismus anhand der Fig. 3
noch erläutert wird.

Neben dem Schnellnagler 2, der Lagerung für den Tisch und
den Mitteln zur Relativverschiebung zwischen Tisch und
Schnellnagler einerseits sowie zwischen Tisch und Bürsteinrichtung andererseits verfügt der in Fig. 1 gezeigte
Polsterautomat noch über eine an einem Galgen 10 gelagerte Drucktellereinrichtung 11; diese bestehend aus
einem weiteren Arbeitszylinder 12 und einem nach unten
auf die Polsterung und den Bezugsstoff ausfahrenden Druckteller 13, der den Bezugsstoff, die Polsterung und den

/14

Träger bei bestimmten Arbeitsvorgängen fest auf den diese Elemente lagernden Tisch drückt, wenn der Einfachheit halber darauf verzichtet wird, den Träger mit dem Tisch bei jedem neuen Bearbeitungszyklus gesondert zu verriegeln.

In Fig. 3 ist schematisch der Wirkungsmechanismus dargestellt, der sich ergibt, wenn das ringförmige Borstenbündel 5b, im Borstenträger 7 gehalten, sich vertikal längs auf den Träger aufgelegtem Bezugsstoff und Polsterung bewegt, in Richtung des Pfeiles A. In Fig. 3 ist der Bezugsstoff mit 12 bezeichnet und in einer Form dargestellt, die sich nach Vollendung des Bürsteneinwirkungsvorgangs ergibt; das Polster ist mit 13 bezeichnet, der Träger mit 14. Der Träger 14 ist, gegebenenfalls unter Zwischenlage eines Abstandshalters 15 auf den Tisch 16 aufgelegt, der in geeigneter Weise, etwa zentral zur Durchführung auch einer Drehbewegung im Gestell 1 gehalten ist. Zu Beginn des Relativverschiebungsvorgangs zwischen Bürsteinrichtung und Bezugsstoff, Polster und Träger liegt das Borstenbündel, wie bei 5a gezeigt, auf dem auf dem Polster aufgelegten Bezugsstoff auf oder befindet sich oberhalb dieses Bezugsstoffes, wobei sich die Borsten aber um einen Abstand B, von der Randkante von Träger und Tisch aus gesehen über den Bezugsstoff nach innen erstrecken. Bei den die Bürsteinrichtung bildenden Borsten kann es sich um im Grunde beliebige Längselemente handeln, wenn sie nur in der Lage sind, die im folgenden noch zu beschreibende Wirkung zu entfalten. Es kann sich um feine Stahldrähte handeln oder um Kunststofflängselemente; bevorzugt wird bei dem dargestellten Ausführungsbei-

1608/ot/mü
21.12.1981                      - 15 -

spiel ein ringförmiges Borstenbündel aus vergleichsweise
steifem Polyamid (Nylon).

Sobald dann die vertikale Relativbewegung zwischen der
Bürsteinrichtung und dem Bezugsstoff, Polster und Träger
eingeleitet wird, legen sich die Borsten zunächst unter
Druck auf den Bezugsstoff auf und gleiten dann, da sie
elastisch nachgeben, am Bezugsstoff entlang, wie sich dies
etwa aus der Position des bei 7' dargestellten Borstenträgers ergibt; die diesen Bewegungsablauf charakterisierenden
Borsten sind mit 5a' bezeichnet. Da sich zwischen den
unter Druck auf dem Bezugsstoff aufliegenden und nach
unten bewegenden Borsten 5a' und dem Bezugsstoff eine
gewisse Reibungseinwirkung ergibt, versuchen die Borsten,
den Bezugsstoff mitzunehmen und spannen diesen daher allseitig ohne jegliches Verziehen über Polster und Träger.
Dabei geraten die Borsten 5a' zu keinem Zeitpunkt außer
Reibungseingriff, dieser wird bei der weiteren Abwärtsbewegung des Borstenträgers sogar noch verstärkt, da immer
mehr der Borsten immer stärker abgeknickt werden und daher ein immer stärkerer Druck entsteht, denn die Borsten
versuchen ja, in ihre ursprüngliche, gestreckte Lage zurückzukehren. Dieser stärkere Druck bewirkt aber im
Grunde einen stärkeren Reibungseingriff, wie ohne weiteres einzusehen, so daß der Bezugsstoff mit seiner Randkante längs des Umfangs von Polster, Träger und Tisch
kräftig nach unten gezogen und gespannt und sauber beim
weiteren Durchlauf gehalten wird.

In Ergänzung des vorher Gesagten ist noch darauf hinzuweisen, daß vorzugsweise an der Unterseite des Tisches 16
feste Halteelemente angeordnet sind, die bei dem dargestellten Ausführungsbeispiel von nadelfeinen Stiften 17 gebildet sind, die sich in engem Abstand über den Außenumfang des Tisches 16 erstrecken und an dessen Unterseite angeordnet sind. Es versteht sich, daß diese Halteelemente auch in anderer Form und Ausführung vorgesehen sein können, und daher auch klettenähnliche Haken, Hechtzahndrahtstifte, Kettenverschlüsse u.dgl. sein können.

Man erkennt nun, daß die Borsten 5a, wenn sich der Borstenträger in der bei 7" dargestellten Position befindet, allmählich aus dem Eingriff mit Polster, Träger und Tisch lösen können und nach unten freispringen, wobei aber Teile dieser Borsten in diesem Übergangszustand noch äußerst schräg stehen und den Bezugsstoff weiter festhalten. Dieses Freispringen beim Entlangstreichen der Borsten an der Unterseite des Tisches 16 bewirkt, daß der überstehende Rand des Bezugs 12 an dieser Stelle auf die Halteeinrichtungen, d.h. bei diesem Ausführungsbeispiel auf die Spannstifte 17, wie sie ausschließlich noch bezeichnet werden sollen, unweigerlich und mit erheblicher Kraft aufgestrichen, aufgepreßt und gedrückt wird. Dies ist deshalb möglich, weil die Spannstifte 17 im Abstand zueinander stehen und zwischen ihnen die sich jeweils frei schlagenden steifen Borsten hindurchgleiten können und notwendigerweise die untere Bezugsstoffrandkante mitnehmen und auf die spitzen Stifte 17 zur Vorfixierung am Tisch aufdrücken. Durch den eigenen Rückzug des Bezugsstoffes verankert dieser sich an allen Seiten - dieser Vorgang spielt sich ja gleichzeitig über den gesamten Umfang von Polster, Träger und Tisch ab,— äußerst fest und in gespanntem Zustand am Träger, wobei diese Verankerung erhalten bleibt, auch wenn die Bürsteinrichtung dann im unteren Umkehrpunkt Träger und Tisch völlig freigibt.

Man kann dann noch ein Übriges tun und durch Einleitung einer Reversierbewegung die Bürsteinrichtung mindestens teilweise nochmals nach oben fahren, wodurch, wie erkennbar, der Bezugsstoffrand noch stärker auf die Spannstifte aufgedrückt wird, denn es ergibt sich dann der umgekehrte Mechanismus wie weiter oben schon beschrieben. Auf jeden Fall ist es erforderlich, Träger und Tisch mit dem besonders gleichmäßig und wirkungsvoll gespannten Bezugsstoff von der Bürsteinrichtung freizufahren, entweder indem man die Bürsteinrichtung wieder völlig nach oben durchfährt oder so stark nach unten absenkt, daß nunmehr die Schnellnageleinrichtung mit Tisch und Träger zur endgültigen Befestigung des Bezugsstoffs am Trägerrand in Wirkung treten kann. Bevor jedoch hierauf eingegangen wird, soll noch eine weitere alternative Ausführungsform einer Bürsteinrichtung erläutert werden, wie sie in Fig. 4 dargestellt ist. Bei diesem in Fig. 4 dargestellten Ausführungsbeispiel besteht die Bürsteinrichtung aus einer örtlich lokalisierten Bürstrolle 18, die über eine innere rollenförmige Nabe 19 verfügt mit Lageröffnung 20 und außen mit Borsten 21 besetzt ist. Die Bürstrolle 18 verfügt über eine gewisse seitliche Ausdehnung und läuft relativ zu Träger und Tisch um diesen um - die Bürstrolle kann auch stationär bei Drehung des Tisches angeordnet sein - sie ist außerdem drehangetrieben und bürstet so den Bezugsstoff im wesentlichen aufgrund des anhand der Fig. 3 schon ausführlich beschriebenen Wirkungsmechanismus unter Spannwirkung nach unten und in die Vorfixier-Halteelemente, also die Spannstifte 17. Es ist möglich, lediglich eine solche Bürstrolle 18 zu verwenden; es können aber auch über den Umfang versetzt mehrere, beispielsweise drei Bürstrollen 18 gleichzeitig am SystemTräger - Tisch mit aufgelegter Polsterung und Bezugsstoff angreifen, so daß bei einer solchen Anzahl von Bürstrollen nach etwa einer Drittel Umdrehung der Bezugsstoff insgesamt gespannt und vorfixiert ist.

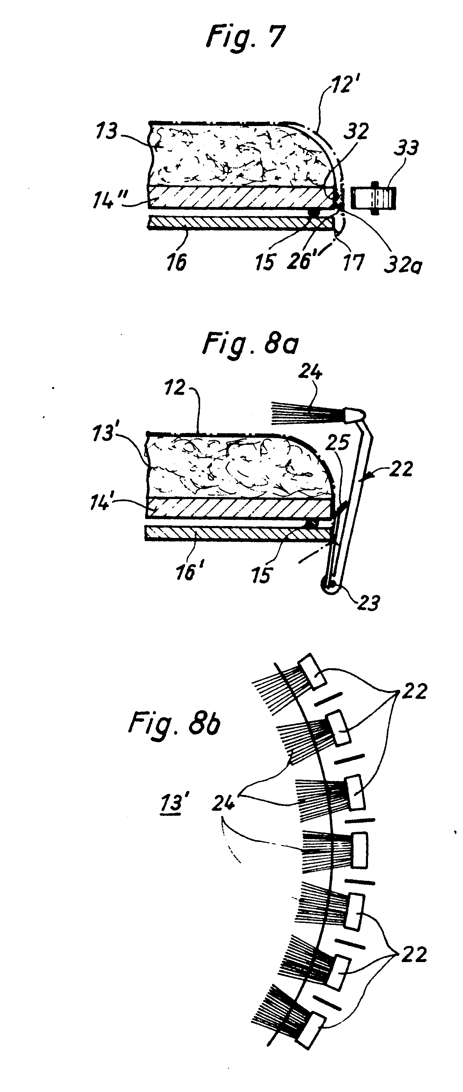

Schließlich ist zur beliebigen Formatanpassung noch eine weitere Form einer Bürsteinrichtung möglich, die stark schematisiert in den  Figuren 8a und 8b dargestellt ist. Bei diesem Ausführungsbeispiel ist die Bürsteinrichtung gebildet von über den Umfang von Träger/Tisch angeordneten, verschwenkbaren Hebeln 22, die jeweils ein Schwenklager 23 aufweisen ausreichend weit unterhalb der Normaltischhöhe. Im oberen Teil verfügt jeder der Schwenkhebel 22 über ein Borstenbündel 24, wie auch die Draufsicht der Fig. 8b zeigt. Polsterung, Träger und Tisch sind jeweils bei 13', 14' und 16' angedeutet. Aufgrund der schwenkbaren Lagerung jedes Schwenkhebels 22 können diese sich erheblich unterschiedlichen Formaten von zu polsternden und zu beziehenden Trägern anpassen, wobei der Träger 14' selbst mit seinem Außenumfang die zur Formatanpassung erforderliche, nach außen oder innen gerichtete Schwenkbewegung jedes Schwenkhebels 22 bewirkt, und zwar dadurch, daß eine eingriffartige Nockenfläche 25 oder eine entsprechend geeignete Fläche am Schwenkhebel 22 selbst in Wirkungseingriff mit dem Außenumfang des Trägers 14' oder Tisches 16' tritt, wenn dieser das erste Mal eingesetzt wird. Die Schwenkhebel 22 nehmen dann eine entsprechend dem jeweiligen Format  des Trägers angemessene Position ein, in welcher die Borstenbündel 24 ausreichend weit auf den Polsterbezug übergreifen. In dieser neuen Schwenkposition wird dann die Schwenklagerung 23 der Schwenkhebel 22 festgespannt, was durch beliebige, an sich auch bekannte Mittel bewirkt werden kann, etwa durch Lagerarretierung, durch Feststellschrauben, durch pneumatische oder hydraulische Spann- und Arretiermittel o. dgl. Anschließend wird die übliche vertikale Relativbewegung zwischen den nunmehr fest arretierten Schwenkhebeln 22 einerseits und Träger und Tisch andererseits durchgeführt, wobei sich der Spannzyklus so oft in dieser arretierten Schwenkposition der Schwenkhebel 22 wiederholt, wie zu beziehende Träger zu diesem Zeitpunkt vorliegen. Eine Formatanpassung ist durch Freigabe der Schwenkverriegelung dann ohne weiteres möglich.

Der zweite Arbeitsschritt zur endgültigen Befestigung des Bezugsstoffes am Träger erfolgt dann dadurch, daß, wie auch schon in der Stammanmeldung P 30 09 422.5 beschrieben, der Schnellnagler unter Anlage vorderer Führungsrollen um Träger/Tisch herumläuft - oder der Tisch sich um den stationären Schnellnagler dreht - und dabei, abgestimmt auf die relative Umdrehungsgeschwindigkeit, Krampen, Polsternägel o. dgl. in die Stirnrandkante 26 des Trägers 14 (s. Fig. 5) oder in die Unterkante bei 26', eingeschossen werden.

In einer vorteilhaften Ausgestaltung vorliegender Erfindung verfügen die vorderen Führungsrollen 27a, 27b des Schnellnaglers (s. auch Fig. 6) über eine ausgeprägte Riemenscheibencharakteristik, d.h. über eine mittlere nutartige Vertiefung 28, die von zwei seitlichen Wülsten 29a, 29b begrenzt wird. Hierdurch umfassen, wie die Fig. 5 in einer Seitenansicht zeigt, diese Wülste 29a, 29b beidseitig die Trägerrandkante und führen so die
frei beweglich gelagerten
Schießmündung 30 des /Schnellnaglers einwandfrei. Dieser
schießt dann bei diesem Ausführungsbeispiel in die Stirnkante 26 des Trägers 14 Befestigungsmittel, beispielsweise Krampen, von denen einer bei 31 in Fig. 6 dargestellt ist. Durch beidseitig am Schnellnagler angeordnete
Führungsrollen 27a, 27b - bezüglich einer genaueren Erläuterung des Schnellnaglers s. die Ausführungen in der
Hauptanmeldung P 30 09 422.5 - ergibt sich eine einwandfreie Führung der Schnellnaglermündung auch dann längs
des Trägers 14, wenn dieser einen erheblichen Höhenschlag
aufweist, was für eine bequeme Sitzform häufig erforderlich ist. Damit die Führungswülste 29a, 29b an den Führungsrollen 28 die Trägerrandkante beidseitig sicher umfassen und sich  hierdurch  gleichzeitig  auch noch eine
zusätzliche Spannwirkung auf den anzuschießenden Bezugsstoff ergibt, wie aus Fig. 5 ohne weiteres erkennbar, ist
der Abstandshalter 15 vorgesehen, der die Spaltöffnung
zwischen Tisch 16 und Träger 14 ermöglicht, in welche
der untere Randwulst 29b jeder Führungsrolle eingreift.

Es ist auch möglich, den Bezugsstoffrand an der Unterkante
des Trägers 14 bei 26 in Fig. 5 zu befestigen, also nicht
stirnseitig. In diesem Fall ragt der Träger 14 mit seinem
Randbereich vorzugsweise über den Tisch 16 hinaus, so daß
der Schnellnagler oder Tacker von unten eine freie Einschießmöglichkeit hat. In Verbindung mit den Führungsrollen kann der Schnellnagler gleichzeitig auch über ein
Schneidmesser verfügen, welches den dann überflüssigen,
restlichen Bezugsstoffrand unterhalb der Nagelspur abschneidet. Dieses Schneidmesser kann auch erhitzt sein
oder insgesamt aus einem Glühdraht o. dgl. bestehen,

1608/ot/mü
21.12.1981

- 21 -

so daß an dieser Stelle die einzelnen Fäden des den Bezugsstoff ausmachenden Gewebes/miteinander verschweißt
(gleichzeitig)
werden, wodurch sich eine zusätzliche Sicherheit gegen
ein Auflösen ergibt. Durch den Spaltabstand zwischen Träger 14 und Tisch 16 aufgrund des Abstandshalters 15 wird
auch eine gute Eingriffsmöglichkeit für eine Ziehklinge -
erhitzt oder nicht - erreicht, so daß der Bezugsstoff gut
beschnitten werden kann.

Eine alternative Ausführungsform der Befestigung des Bezugsstoffrandes am Trägerrandbereich ist schematisch in
Fig. 7 noch dargestellt. Bei diesem Ausführungsbeispiel
erfolgt die Verbindung nicht durch eine mechanische Nagelung o. dgl., sondern durch Verkleben, wobei beliebige
Klebstoffe verwendet werden können, beispielsweise solche,
die erst dann eine Klebwirkung entfalten, wenn sie mit
einer ebenfalls mit dem Klebstoff bestrichenen Oberfläche
in Kontakt treten. Es ist daher möglich, etwa die Stirnrandkante 26' des Trägers 14'' mit einer Klebstoffschicht
32 zu beschichten, desgleichen mit einer Klebstoffschicht
32a die Innenfläche des Bezugsstoffs 12' etwa im der
Stirnkante später gegenüberliegenden Bereich. Eine innige
Verklebung findet dann schon statt, wenn die Borstenbündel der beliebigen Bürsteinrichtungen, wie weiter vorn
beschrieben, den Bezugsstoff auf den Klebstoffbereich
drücken; in vorteilhafter Ausgestaltung kann noch eine
zusätzliche Andruckrolle 33 vorgesehen sein, die bei der
Bürsteinrichtung 18 der Fig. 4 mit umlaufen kann und den
Stoff im klebstoffbeschichteten Bereich fest an die Trägerstirnkante anpreßt oder die später nach der Vorfixierung durch die Bürsteinrichtung um die Randkante umläuft.

/22

Verwendet man Klebstoffe, die durch Erhitzen ihre Klebwirkung entfalten, dann kann die Andruckrolle 33 in Fig. 7 auch geheizt sein, wodurch    dann die Klebwirkung nach der festen und einwandfrei durchgeführten Vorfixierung mit Hilfe der Bürsteinrichtungen bewirkt wird. Ein Vorteil des Verklebens des Bezugsstoffrandes mit dem Trägerrandbereich ist noch darin zu sehen, daß hierdurch gleichzeitig auch eine Verschmelzung der einzelnen Gewebefäden ohne eine zusätzliche Sicherung möglich ist.

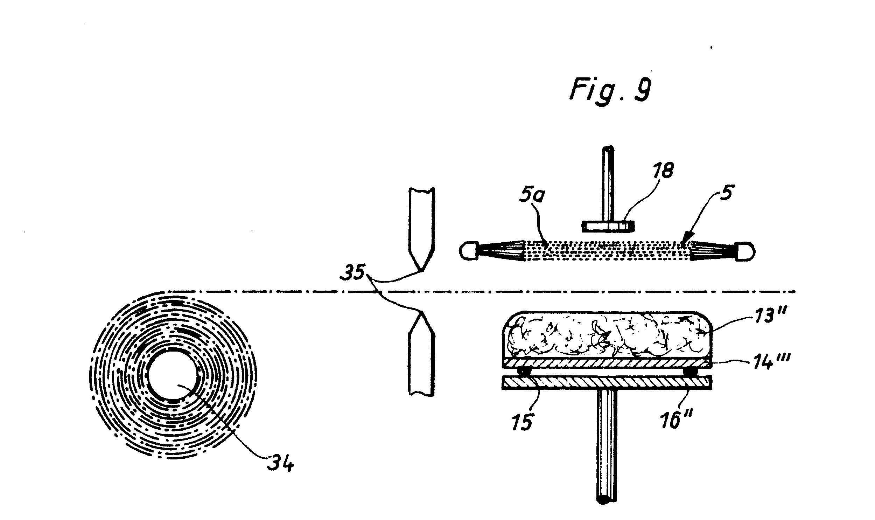

In einer besonders vorteilhaften Ausgestaltung ermöglicht die vorliegende Erfindung schließlich noch aufgrund ihrer Grundkonzeption einen vollautomatischen Polsterbetrieb, in dem beispielsweise der jeweils mit seinem zugehörigen Polster schon versehene Träger von einer bestimmten Seite auf den Tisch aufgebracht wird und von einer anderen Seite, in Fig. 9 gezeigt, auf Tisch 16" mit Träger 14"' und Polsterung 13" von einer Vorratsrolle 34 der Bezugsstoff mit Hilfe in Fig. 9 nicht dargestellter Greiferelemente o. dgl., die in vielen automatisch gesteuerten Industrien für sich gesehen bekannt sind, bis über Träger und Tisch gezogen wird. Anschließend wird mit einer bei 35 schematisch dargestellten Schneideinrichtung eine entsprechende Länge des Bezugsstoffs abgezogen und dieser befindet sich dann automatisch in richtiger Vorposition auf Polsterung 13" mit Träger 14"', woraufhin dann der weiter vorn schon im einzelnen geschilderte, weitere automatische Polster- und Bezugsvorgang durchgeführt werden kann. In Fig. 9 ist die Bürsteinrichtung noch mit 5 und der Druckteller mit 40 bezeichnet.

In einer weiteren vorteilhaften, ergänzenden Ausgestaltung der Erfindung kann die Bürsteinrichtung, die ja die allgemeine Form einer Ringbürste aufweist, so ausgestaltet sein, daß diese Ringbürste aus zwei oder mehreren Teilen besteht, wobei jeder der Teile im geschlossenen Zustand der Ringbürste von einem durchgedrückten Kniehebel gebildet bzw. gehalten ist, so daß in der Arbeitsstellung der feste Bürstenkranz erhalten ist. Nach Beendigung des Überstreifvorgangs können jedoch die einzelnen Ringbürstenteile durch Auflösen der durchgedrückten Kniehebel geöffnet werden, so daß die Ringbürste insgesamt sich von dem nunmehr bezogenen Teil löst und dieses frei zugänglich ist.

Andererseits ist es auch möglich, daß die Bürsteinrichtung, in Form einer Ringbürste oder in sonstiger, weiter vorn schon erwähnter oder noch zu erwähnender Form gleichzeitig auch die Funktionen der Halteelemente mit übernimmt, die den Bezugsstoff nach dem Überstreifvorgang in der gewünschten glatten Spannwirkung für das endgültige Befestigen nach Art einer Vorfixierung festhalten. Zu diesem Zweck bleiben die Bürsten- oder Niederstreifelemente nach dem Überstreifen des Bezugsstoffs auf der Unterseite stehen und verbleiben in einer Spannwirkverbindung mit dem Bezugsstoff, bis dieser durch einen nachfolgenden Nagelvorgang befestigt ist.

Diese Ausführungsform ist besonders für einen Halbautomaten geeignet, bei dem die Bedienungsperson dann lediglich noch nach der Außenkontur des Sitzes und diesem folgend zu nageln braucht. Bei Verwendung eines Tackers kann dieser Nagelvorgang durch einen Abstandsführungsanschlag noch erleichtert werden.

In einer weiteren Ausgestaltung kann, in der Zeichnung nicht dargestellt, eine Abdeckung, vorzugsweise eine kastenförmige Abdeckung um den zu beziehenden Sitzträger angeordnet sein. Diese Abdeckung dient einmal als Schutz vor dem Eingreifen in die sehr scharfen Nadelspitzen, wenn diese als Halteelemente verwendet werden und stellt außerdem einen exakten Fixierrahmen oder Auflegerahmen für den Bezugsstoffzuschnitt dar. Hierzu verfügt die Abdeckung auf ihrer Oberfläche über eine tischplattenähnliche Gestaltung, die eine kulissenartige Aussparung aufweist, die genau der Sitzträgeraußenkontur nachgeformt ist. Es versteht sich, daß die kastenförmige Abdeckung für den nachfolgenden Bürst- oder Überstreifvorgang den Träger und gegebenenfalls den Tisch freigibt, etwa durch eine nach abwärts gerichtete Verschiebebewegung.

Im übrigen ist weiter vorn schon darauf hingewiesen worden, daß die Bürst- oder Niederstreifelemente der Bürsteinrichtung von vielfacher Form und von unterschiedlichsten Materialien sein können; so können diese Bürst- oder Niederstreifelemente auch die Form von Fingern oder sogar die Form einer Schaumstofflippe aufweisen. Es können auch mit bestimmten Materialien, beispielsweise lederbezogene, elastische Stahlfedern o. dgl. Verwendung finden.

Schließlich läßt sich der Bürstvorgang noch dadurch verstärken, daß die Bürst- oder Streifelemente in ihrer Länge abgestuft sind und an ihren Spitzen eine gratartige Anflachung aufweisen, wodurch eine stärkere Streif- und Spannwirkung erzielt wird.

Schließlich ist es möglich, den Bezugsstoffzuschnitt durch Stanzen, beispielsweise im automatischen Ablauf der Fig. 9, sofort auf eine exakte Form zu bringen, so daß eine Nacharbeit, etwa das erwähnte Beschneiden beim Naglerdurchlauf nicht erforderlich ist. Der Bezugsstoffzuschnitt kann gleichzeitig auch noch besäumt sein, so daß nach dem Beziehen auch das zusätzliche Anbringen einer Abdeckkante nicht notwendig ist. Hierzu kann vorzugsweise auf der Trägerunterkante genagelt werden oder es kann eine Ziernagelspur gesetzt werden.

Der weiter vorn schon in Verbindung mit der Darstellung der Fig. 7 erwähnte Klebevorgang kann noch dadurch ergänzt werden, daß eine der Führungsrollen, etwa am Nagler oder eine gesonderte Rolle mit Hohlstacheln ausgebildet ist, aus denen während der Drehbewegung Klebstoff ausfließt oder ausgepreßt wird und so auf und zwischen den Bezugsstoff und die Trägerrandkante gelangt. Eine nachfolgende Rolle kann dann den Bezugsstoff andrücken und mit dem Sitzträger verkleben, gegebenenfalls auch geheizt sein.

Bei der Schwenk- und Gelenkarmlagerung des Nagelapparats oder Schnellnaglers, wie er im folgenden lediglich noch genannt wird, ist wesentlich, daß dieser im wesentlichen rückstellfrei ist, daß der Mündungsbereich des Schnellnaglers präzise an der Stelle sitzt und geführt wird, wo die Nagelspur zum Befestigen des Bezugsstoffrandes bei einem automatischen Polstervorgang verlaufen soll und gleichzeitig sicherzustellen, daß nach Abheben des vom Trägerrand selbst geführten Schnellnaglers genau die Position beibehalten ist, die als Endposition im Moment des Abhebens vom Trägerrand von dem Schnellnagler erreicht worden ist. Diese Endposition umfaßt auch jede beliebige Schrägstellung, denn beim nachfolgenden Nagelvorgang setzt der Schnellnagler dann genau wieder an der Stelle des nächsten, aber mit dem vorhergehenden Träger identischen Trägers an, an welchem der vorherige Nagelvorgang beendet worden ist. Damit sind die Voraussetzungen für einen automatischen Durchlauf gegeben. Eine erste Ausführungsform einer Tackerlagerung ist in den Fig. 10 und 11 dargestellt.

Die Darstellung der Fig.10 zeigt ein Lagergestell 51, welches im Hintergrund in nicht mehr zu erläuternder Weise Lager- und Polstermechanismen 52 zeigt, die dazu dienen, auf einem Tisch den zu beziehenden Träger zu halten und den Bezugsvorgang so weit abzuschließen, daß, wie weiter vorn schon erwähnt, die Bezugsstoffrandkante um den Trägerrand gespannt in einer am Tisch vorfixierten Position gehalten ist und das Ganze dann dem Schnellnagler zur Befestigung des Bezugsstoffes entweder an der Stirnkante des Trägers oder an dessen Unterkante zugänglich gemacht wird. Bei dem dargestellten Ausführungsbeispiel läuft dann der Schnellnagelvorgang - ohne der Erfindung vorgreifen zu wollen - so ab, daß als Relativverschiebung zwischen dem Tisch mit Träger und Bezugsstoff und dem Schnellnagler der Tisch gedreht wird, während der Schnellnagler über seine Gelenkarmlagerung stationär am Gestell 51 befestigt ist. Mit 53 ist noch ein galgenförmiger Ausleger bezeichnet, der einen oberen Druckteller hält; 54 ist ein Schaltbord. Anstelle der im folgenden genauer beschriebenen Gelenkarmlagerung kann auch eine Kreuzbogenführung verwendet werden.

Bei dem in Fig.10 gezeigten Ausführungsbeispiel umfaßt die Gelenkarmlagerung für den Schnellnagler zunächst eine Festpunkt-Lagerstütze am Gestell 51, hier bestehend aus einem Bügel 55, der einen ersten Schwenkhebel 56 so lagert, daß dieser längs des Doppelpfeils 90 nach oben und unten verschwenkt werden kann. An diesem Hebel 56 greift auch der einzige Kompensations- und Rückstellmechanismus an, der das Gewicht der Gelenkarmlagerung und des Schnellnaglers gegen den Schwerkrafteinfluß halten muß. Dieser Kom-

/27

pensationsmechanismus umfaßt eine Feder 57, die bei 58 am Tisch stationär festgemacht an einem kurzen, mit dem Hebel 56 einstückigen Querhebel angreift, der vom Bügel 55 verdeckt ist. Der Hebel 56 bildet insofern einen Kniehebel und die Feder 57 versucht den Hebel 56 gegen das Gewicht der gesamten Lagerung und des Schnellnaglers nach oben zu ziehen, so daß sich insoweit ein Gleichgewichtszustand einstellt. Die Feder 57 ist, obwohl kraftvoll, ausreichend weich und nachgiebig in ihrer Federkonstanten, so daß die um den Schwenkpunkt 59 mögliche Vertikalverschiebung des Schnellnaglers praktisch rückstellfrei und ohne großen Kraftaufwand möglich ist. Es versteht sich, daß anstelle der Feder auch ein Gewicht verwendet werden kann, wodurch sich ohne Einfluß einer Federkonstanten ein Gleichgewichtszustand aufrechterhalten läßt.

Am Hebel 56 ist ein Querglied 60 befestigt oder angeflanscht, welches als größeres Hohlrohr ausgebildet ist und sich senkrecht zur Zeichenebene in Richtung auf Tisch mit zu beziehendem Träger erstreckt. In Fig. 11 ist das Endstück des Rohres 10 erkennbar. Ausgehend von der Lagerung an diesem Rohr und bezüglich der noch vorhandenen Lagerelemente bis zur Endlagerung des Schnellnaglers 11 verläuft die Gelenkarmlagerung bei dem in den Fig. 10 und 11 dargestellten Ausführungsbeispiel wie folgt.

Das Rohr 60, welches als Vierkanthohlrohr ausgebildet sein kann, enthält für eine Lagerwelle 12 mindestens eine Gleitführung, die nicht dargestellt ist. Dadurch kann die Welle 62 in Längsrichtung des Rohres 60 verschoben und entsprechend der mittelbar am

/28

Rohr 60 befestigte Schnellnagler 61 nach vorn in seine Schußposition gebracht werden. Die Verschiebung, nämlich die so bewirkte Horizontalverschiebung wird durchgeführt mit Hilfe eines
pneumatischen oder hydraulischen Arbeitszylinders 63, der bei
64 am Ende der Welle, wo diese aus dem Rohr 60 austritt (siehe
Fig. 11) angreift und den Schnellnagler 61 so in eine vordere
Schußposition bringen und wieder zurückziehen kann. Die horizontale Verschiebung der Welle 62 im Rohr 60 erfolgt bedarfsgesteuert immer dann, wenn der Schnellnagler 61 für eine neue
Schußfolge an die Randkante des Trägers herangebracht werden
soll. Entsprechend ergibt sich der Rückführ-Steuerbefehl zum
Einziehen des Schnellnaglers 61 etwa in die in Fig. 11 dargestellte
Ausgangsposition oder in jede Zwischenposition, da der Schnellnagler nicht völlig zurückfahren muß, dann, wenn im Ablauf des
automatischen Polstervorgangs ein Bezugsstoff am zugeordneten
Träger vorfixiert ist. Der Ausgang der Welle 62 am Ende des
Rohrs 60 (siehe die Darstellung der Fig. 11) bildet eine Schwenklagerung 65. Daher kann sich ein unterer Hebelarm 66 um die
Welle 60 im Sinne des Pfeils 67 verdrehen, was zu einer freien
Rotationsbewegung des am unteren Hebelarm 66 befestigten
Schnellnaglers 61 führt, und zwar in einer Vertikalebene, wobei
eine weitere freie Rotationsbewegung, nunmehr in einer horizontalen Ebene, durch ein weiteres Drehlager gewährleistet ist,
welches am vorderen Abschluß des unteren Hebels 66 bei 68
gebildet ist. Hierdurch ergibt sich dann eine Verdrehbarkeit
des Schnellnaglers entsprechend dem Pfeil 69. Bei dem in Fig. 11
dargestellten Ausführungsbeispiel ist ein am Körper des Schnellnaglers horizontal nach vorn und hinten verschiebbarer Schlitten 70

/29

vorgesehen, der beidseitig Führungsrollen 71 trägt. Dieser Schlitten dient der Schußauslösung sowie der Auslösung eines im folgenden noch zu beschreibenden Arretiermechanismus. Wegen der völlig freien Verschwenk- und Verdrehbarkeit um die drei Schwenklager 59, 65 und 68 ergibt sich zwar einerseits eine von Rückstellkräften freie Führung und unmittelbare Beweglichkeit des Schnellnaglers 61 in jeder beliebigen Richtung, wobei lediglich die Anpreßrichtung an die Trägerrandkante unter der Kraftwirkung des Arbeitszylinders 63 steht, die in Richtung des Rohrs 60 bzw. der Welle 62 verläuft. An diesem Arbeitszylinder greifen aber auch die Arbeitssteuerbefehle an, so daß hier ohnehin willkürliche Eingriffe erforderlich sind.

Sobald bei einem Durchlauf der Schnellnagler den Bezugsstoff allseitig angeschossen hat, ergeht von einem geeigneten Sensor oder Drehfühler, der beispielsweise einen völligen Umlauf als Relativbewegung zwischen Schnellnagler und Tisch beim Schießvorgang erfaßt, der Steuerbefehl an den Arbeitszylinder 63, den Tacker ganz oder teilweise von der Trägerrandkante zurückzuziehen. In diesem Moment lösen sich auch die Führungsrollen 71 von der Trägerrandkante und der Schlitten 70 gleitet nach vorn, wobei ein gemeinsamer Steuerbefehl an eine Vielzahl von Arretier- oder Bremseinheiten ergeht, die den erwähnten Schwenklagern 59, 65 und 68 zugeordnet sind und deren freie Verschwenkbewegung immer dann, wenn der Schnellnagler nicht im Eingriff mit der Trägerrandkante ist, unterdrükken. Mit anderen Worten, die jeweils eingenommene Endposition des Schnellnaglers unmittelbar im Moment des Abhebens wird gespeichert, indem in diesem Moment die freie Schwenklagerbeweglichkeit verriegelt wird. Zur Verriegelung sind bei dem dargestellten Ausführungsbeispiel flächenartige Bremsbacken vorhanden, nämlich eine Bremsbacke 72 für die Arretierung der Schwenklagerung 59, eine Bremsbacke 73 für die Arretierung des Schwenklagers 65 und eine Bremsbacke 74 für das Schwenklager 68. Diese Bremsbacken werden kontaktiert von jeweils mit Bezug auf die Beweglichkeit des zugeordneten Schwenklagers stationären Teilen, wobei diese Feststellung aber relativ ist, denn die Bremsbacke kann sich auch am verschwenkten Teil befinden, während das Arretier- oder Bremsteil stationär gehalten ist. Bei der Arretiereinrichtung für das Schwenklager 59 ist beispielsweise die Bremsbacke 72 stationär am Gestell 51 befestigt und am Hebel 56 befindet sich ein Arretierteil 75, bestehend aus einer am Hebel 56 befestigten Platte 76 und dem eigentlichen Arretierelement 77, welches von der Platte teilweise verdeckt ist und unter pneumatischer Steuerung einen Stift herausdrückt, der sich unter starker Reibungseinwirkung an die Bremsbacke 72 anlegt. Auf diese Weise wird der vom Schlitten 70 erzeugte Steuerbefehl in eine Arretierung hier zunächst der vertikalen Verschwenkmöglichkeit um die Schwenklagerung 59 umgesetzt; ähnliche Systeme greifen an den anderen Schwenklagern an. So ist der verdrehbaren Brems- oder Arretierbacke 73 der an einem Trägerstück 78, welches ortsfest am Rohr 60 gehalten ist, befestigte Arretierblock 79 zugeordnet, der einen Bremsstift gegen die Bremsbacke 73 drückt. In entsprechender Weise preßt der Arretierblock 80 den Arretierstift 81 gegen die Bremsbacke 74, die horizontal mit dem Hauptlagerträger 82 für den Schnellnagler 61 um die vom Schwenklager 68 gebildete vertikale Achse verschwenkt. Sobald der Schnellnagler unter der Wirkung des Arbeitszylinders 63 an die Trägerrandkante herangefahren ist, gelangen die Führungsrollen 71 mit dieser in eine Druckverbindung und der Schlitten 70 gleitet zurück, so daß sofort
sämtliche Arretiermittel freigegeben werden und bei dem dann
einsetzenden Durchlauf der Schnellnagler rückstellfrei der Kontur des Trägers folgen kann.

Eine weitere, vorteilhafte Ausgestaltung vorliegender Erfindung
besteht darin, beim automatischen Polstern den Arbeitsablauf
stärker in Einzelelemente zu verlegen und auf diese Weise ein
besonders präzises Arbeiten der an diesem Vorgang insgesamt
beteiligten Arbeitskomponenten zu erzielen.

Anhand der Darstellung der Fig. 14 wird daher zunächst der
grundsätzliche Ablauf eines Beziehens und Polsterns eines Stuhlsitzes beschrieben, und zwar in vier aufeinanderfolgenden Einzelphasen, die mit I bis IV bezeichnet sind.

In Phase I der Fig. 14 erkennt man den zu beziehenden Stuhlsitz,
der im folgenden allgemein als Träger 101 bezeichnet wird und
der, wie schon erwähnt, auch eine Rückenlehne, ein Sesselteil,
ein sonstiges flächiges Teil, eine Paneel o. dgl. sein kann. Auf
dem Träger 101 - in dem Phasenablauf der Fig. 14 sind lediglich
jeweils ein linker Ausschnittsbereich gezeigt; man muß sich die
Anordnung in der Zeichenebene rotationssymmetrisch vorstellen -
ist das Polsterelement 102, beispielsweise ein Schaumstoffkissen
aufgelegt; das Schaumstoffkissen kann auf den Träger 101 auch
aufgeklebt oder sonstwie fixiert sein. Die Einheit aus Träger 101
und Polsterkissen 102 wird auf eine zur Polsterautomat-Maschine

/32

gehörenden Trägerplatte 103 aufgelegt, die nach unten von einem Trägerstab 104 gehalten bzw. abgestützt ist. Ergänzend ist der so gehaltene Träger 101 mit Polsterkissen 102 noch von einer Rahmenstruktur umgeben, die im folgenden als Tisch 105 bezeichnet wird und die eine Platte darstellt, die einen mittleren Ausschnitt aufweist, in den Träger 101 mit Polster 102 im wesentlichen bündig eingelegt und auf die Trägerplatte 102 aufgesetzt werden kann. Der Tisch 105 dient in dieser Arbeitsphase der Bedienungsperson auch als Arbeitstisch oder Unterlage und er kann beidseitig noch zusätzliche Ausschnitte aufweisen, damit der Träger 101 von Hand in den Tischausschnitt 105a eingesetzt und auf der Trägerplatte 103 einwandfrei befestigt werden kann, wenn dies erforderlich ist. Dabei kann die Trägerplatte 103 beispielsweise über nach oben gerichtete Paßstifte verfügen, die in entsprechende Bohrungen auf der Trägerunterseite eingreifen (nicht dargestellt). Schließlich wird von der Bedienungsperson dann, den Träger 101 mit Polster 102 allseitig überlappend und daher in den Randbereichen auf den angrenzenden Tischteilen aufliegend, der Polsterbezugsstoff 106 aufgelegt, wobei der Tisch 105 Randmarkierungen, entweder als erhabene Stellen oder in Form von Strichführungen, aufweisen kann zur Erleichterung der Auflage des Bezugsstoffes 106, welches dann an diese Markierungen 107 lediglich angelegt zu werden braucht.

Hiermit ist die Vorbereitungsphase I abgeschlossen.

Es schließt sich dann die Beziehphase II an, die nunmehr, wie auch die folgenden Phasen, vollautomatisch ablaufen, und zwar durch Auslösung durch die Bedienungsperson. Sobald die Auslösung erfolgt ist - hierbei wird eine Zweihandauslösung bevorzugt,-fährt zunächst ein Bezugsrahmen 108 von oben auf Träger 101 mit aufgelegtem Bezugsstoff 106 zu, wobei sich der Tisch 105 vorher oder im gleichen Verlauf wie der Bezugsrahmen 108 zur Freigabe von Träger 101 mit aufgelegtem Bezugsstoff 106 nach unten absenkt. Der Bezugsrahmen 108 ist so ausgebildet, wie in Fig. 12 genauer erkennbar; er verfügt über eine ringförmige Rahmenstruktur, die in etwa dem Außenumfang des Trägers 101 folgt und die, vorzugsweise gleichmäßig besetzt, nach innen gerichtete Borsten 108a aufweist. Die Länge der Borsten und ihre Dickenanordnung ist jedenfalls so getroffen, daß beim Auftreffen auf den Bezugsstoff 106 die Borsten mindestens über den vertikal nach unten längs des Polsters 102 fallenden Bezugsstoffrand gleiten, vorzugsweise aber auch länger sind. Hierdurch ergibt sich ein Bürst- und Aufstreichvorgang bei gleichzeitigem, gleitendem Reibungseinfluß zwischen den Bürsten 108a und dem Bezugsstoffrandbereich 106a. Je nach Art und Beschaffenheit der Bürsten und deren Reibfähigkeit ergibt sich ein wirkungsvoller Spannvorgang, und zwar allseitig völlig gleichmäßig, wobei die Borsten 108a bei der weiteren Abwärtsbewegung des Bezugsrahmens 108 am nunmehr je nach Wunsch fest und straff gespannten Bezugsstoff und dessen Randkante entlanggleiten und den Bezugsstoff weiter spannen bzw. im Randkantenbereich festhalten bis etwa zu der fest durchgezogenen, mit 108' in der Bezugsphase II dargestellten Position. Man erkennt, daß sich hierdurch auch in Randkantenbereichen und bei scharfen Ecken ein praktisch faltenfreies gleichmäßiges Aufbürsten und Spannen und nach Untenziehen des Bezugsstoffs 106 ergibt.

An die Bezugsphase II schließt sich dann die Aufsetzphase III für die Form an. Diese Form kann vorzugsweise schlüsselförmig ausgebildet sein; sie ist in Fig. 14 mit 109 bezeichnet und kann in etwa das negativ-komplementäre Abbild des Trägers 101 mit Polster 102 und Bezugsstoff sein. Die Form 109 senkt sich von oben auf den Träger 101 mit dem Bezugsrahmen 108 noch gespannt gehaltenem Bezugsstoffrandkante und verfügt über periphere Mittel, die die Spannhaltung des Bezugsrahmens 108 übernehmen. Tatsächlich senkt sich nämlich der Bezugsrahmen 108 beim Formaufsetzen weiter nach unten ab und passiert den Träger 108 vollständig, wobei er sich dann in der in Fig. 14 als letzte dargestellten kombinierten Halte- und Nagelphase IV in der bei 108" dargestellten Position befindet. Zunächst jedoch ergibt sich in der Aufsetzphase III der Form die Übergabe der gespannt gehaltenen Bezugsstoff-Randkante von den Borstenbündeln 108a des Bezugsrahmens 108 auf die Haltemittel 109a der Form. Dabei wird dann durch das vollständige Ablaufen des Bezugsrahmens 108 nach unten und durch das Halten der Randkante des Bezugsstoffs durch die Form die Trägerunterkante und/oder auch dessen Seitenrandkante frei, so daß nunmehr, nämlich in der Halte- und Nagelphase IV das Anschießen des frei nach unten hängenden Bezugsstoff-Randkantenteils erfolgen kann.

Entsprechend einer bevorzugten Ausgestaltung ist die Form 109 zunächst mit einem sich vertikal nach unten erstreckenden Ringflansch 110 versehen, der Träger mit Polster im Abstand oder bündig umgeben kann; von diesem Ringflansch 110 gehen dann wieder in vorteilhafter Ausgestaltung nach innen spezielle Fixiermittel 111 aus, die in einem echten Fixier- und/oder Reibkontakt mit der Bezugsstoff-Randkante in dem Bereich stehen, in welchem sie sich radial
nach innen auf Polster/Träger und Bezugsstoff-Randkante erstrekken. Bevorzugt handelt es sich bei diesen Fixiermitteln 111 ebenfalls um Borsten, im speziellen Fall also um eine am Ringflansch
110 befestigte und radial nach innen gerichtete Borsten aufweisende
Ringbürste; hier sind allerdings auch andere Fixiermittel denkbar,
beispielsweise ein innen am Ringflansch 110 befestigter Gummiwulst, ein nachgiebiger Schaumstoffwulst o.dgl. Bei Verwendung
eines Gummiwulstes kann dieser beispielsweise auch aufblasbar
sein. Beim Abwärtsfahren der Form 109 in der Aufsetzphase III
können die Fixiermittel 111 dabei auf den Randkantenbereich des
Bezugsstoffs 106 noch eine weitere Spann- und Bürstwirkung ausüben.

Sobald dann die Form, etwa durch bündige Anlage oben auf dem
Polsterbereich, zur Ruhe gekommen ist, schließt sich dann
die Halte- und Nagelphase IV an, wie in Fig.14 gezeigt. In
dieser Nagelphase ergibt sich zwischen dem in der Form 109 gehaltenen Träger 101 mit Bezugsstoff und Polster und einem
Tacker eine Relativverschiebung derart, daß der Tacker die untere Bezugsstoff-Randkante an den Träger 101 anschießt.

Bevorzugt ist der Tacker in diesem Fall stationär gelagert und
orientiert sich bei seinem Durchlauf an einem horizontalen zusätzlichen Ringflansch 109b der Form 109, wie weiter unten noch
erläutert wird.

Der Gesamtaufbau der automatischen Polstervorrichtung zur Durchführung zunächst des bisher beschriebenen Verfahrensablaufs entsprechend den Phasen I bis IV ist dann in Fig. 12 gezeigt. Die Vorrichtung umfaßt stationäre Stand- und Lagerteile; sie ist insgesamt mit 112 bezeichnet und verfügt über Seitenplatten 112a und 112b. An der Seitenplatte 112b ist ein Schaltkasten 113 befestigt. Die Vorrichtung 112 lagert ferner ein galgen- oder brückenartiges Trägerteil 114 welches die Hauptarbeitskomponenten, wie in den Phasen I bis IV soeben geschildert, seinerseits höhenverschieblich trägt. Von einer unteren festen Platte 115 erstreckt sich der Trägerstab 104, auf dessen von ihm gehaltener Trägerplatte der Träger 101 mit aufgelegter Polsterung und Bezugsstoff angeordnet ist. Auf praktisch gleicher Höhe befindet sich bei der in Fig. 12 dargestellten Zeitphase der Tisch 105; er ist vorzugsweise an seinen vier Eckbereichen über Gleitführungen 115' vertikal verschieblich gehalten und kann daher im gesteuerten Arbeitsablauf nach unten zur Freigabe von Träger mit aufgelegtem Bezugsstoff abgesenkt werden.

Oberhalb der Kombination Tisch 105/Träger mit Bezugsstoff befindet sich die aus Bezugsrahmen 108 mit Ringborstenbündel 108a bestehende Ringbürste; sie ist zur selbsttätig gesteuerten Absenkung an den Kolbenstangen zweier beidseitiger Arbeitszylinder 116a, 116b gelagert. Durch den großen Vertikalhub, den diese stationär am Brückenträger 14 gehaltenen Arbeitszylinder 116a, 116b durchführen, kann die Ringbürste sich in der Ausgangsposition ausreichend hoch über dem Tisch 105 befinden zur Ermöglichung eines Einlegens des Trägers und kann später so weit unterhalb des Trägers abgesenkt werden, daß der in der Zeichenebene hinter dem Brückenträger 114 angeordnete Tacker zunächst horizontal heranfahren und dann den Träger 101 untergreifen kann.

Oberhalb der Ringbürste 108 befindet sich die Form 109 mit peripherem Vertikalflansch 110 sie wird von der Kolbenstange eines bei 117 dargestellten Arbeitszylinders, der ebenfalls vom Brückenträger 114 stationär gehalten ist, nach unten angetrieben und verfügt noch über zwei zusätzliche Fixier-Arbeitszylinder 118a, 118b, deren Kolbenstangen mit unteren Fixierzapfen 119 sich zunächst mit absenken und bei dieser Bewegungsphase ein mögliches Verdrehen der Form verhindert. Die Form setzt sich daher in einwandfreier Zuordnung auf den normalerweise ja unrunden Träger 101 auf; die Arbeitszylinder 118a,118b sind nur dann nicht notwendig, wenn mit rotationssymmetrischen Trägern und Formen gearbeitet wird. Sobald jedoch die Halte- und Nagelphase IV erreicht ist, fahren die Kolbenstangen der Arbeitszylinder 118a, 118b wieder nach oben und geben daher die Form zusammen mit dem von ihr gehaltenen Träger zur Durchführung einer Relativbewegung zum Tacker frei, lassen also die Rotationsbewegung von Träger und Form zu.

An dieser Stelle ein Hinweis. Es ist möglich, daß nach Erreichen der Halte- und Nagelphase IV der automatische Polstervorgang auch abgebrochen wird, denn der Träger 101 ist fest in der Form 109 fixiert und der Bezugsstoff ist mit überstehender Randkante vollständig und einwandfrei gespannt. Man kann daher an dieser Stelle auch, wenn man von dem automatischen Nageln und Anschießen der Randkante absehen will, die Form 109 aus ihrer Halteverbindung mit der Kolbenstange des Arbeitszylinders 117 lösen, von Hand umdrehen und dann entweder in einen geeigneten Trägerstab einsetzen oder auf einen Tisch ablegen und die Randkante mit einem Handtacker anschießen. Diese Möglichkeit liegt jedenfalls innerhalb des erfindungsgemäßen Rahmens, bevorzugt wird jedoch die weitere automatische Bearbeitung.

Sobald nämlich, wie in Figur 12 nicht dargestellt, Tisch 105, Bezugsrahmen 108 vollständig nach unten durchgefahren sind und die Form 109 bündig auf dem bezüglich seiner Höhe ja stationär gelagerten Träger 101 aufsitzt, fährt seitlich der Schnellnagler an den Träger heran.

Die Lagerung des Schnellnaglers läßt sich am besten der Darstellung der Fig.13 entnehmen, in Verbindung mit Fig.15. Eine hintere stationäre Rahmenstruktur 119 der Vorrichtung 112 lagert horizontal verschieblich,—beispielsweise über im einzelnen nicht weiter zu erläuternde horizontale Gleitführungen in Verbindung mit diese Horizontalverschiebung bewirkenden Arbeitszylindern -, einen Trägerrahmen 120, der seinerseits wieder eine sich zur anderen Seite schließende Trägerbrücke 121 lagert. Es ergibt sich hierdurch, nämlich durch die beidseitig umlaufende Rahmenstruktur 119 mit dem in dieser horizontal verschieblich gelagerten Trägerrahmen 120 sowie der Trägerbrücke aus 121 eine Art Käfiglagerung für den Tacker. Zunächst sei jedoch darauf hingewiesen, daß die Trägerbrücke 121 im Trägerrahmen 120 selbst nochmals vertikal verschieblich gelagert ist, denn tatsächlich verfügt der

Trägerrahmen 120 über ein an ihm festgemachtes Vertikalteil 120a, welches der vertikalen Verschiebbarkeit der Trägerbrücke 121 dient; im Vertikalteil 120a kann auch der diese Höhenverschiebung steuernde, in der Zeichnung nicht dargestellte Arbeitszylinder gelagert sein. An der Trägerbrücke 121 ist dann wiederum, an einem Ausleger 121a gehalten, das innenliegende Gesamtsystem zunächst in einer Vertikalebene schwenkbar gelagert, und zwar über Schwenkzapfen 122, an denen Rückstellfedern 122a angreifen. Die Schwenkzapfen 122 lagern einen Vertikalschwenkrahmen 123, wie jetzt genauer der Darstellung der Fig. 15 entnommen werden kann; auch dieser Rahmen schließt sich im eckigen Verlauf halbkreisförmig um die weitere innere Tackerlagerung und den Tacker, wobei der Vertikalschwenkbewegung bewirkende Arbeitszylinder in Fig. 13 mit 124 bezeichnet ist. Bisher ergeben sich somit für die Tackerlagerung zwei, eine lineare Verschiebung bewirkende Gleitlagerungen, nämlich in der horizontalen Richtung - um die Annäherung des Tackers an Form und Tisch zu ermöglichen und die Höhenverschieblichkeit, dargestellt durch die Trägerbrücke 121 und schließlich eine erste Verschwenkmöglichkeit in einer horizontalen Ebene durch die Zapfenlagerung 122 mit Vertikalschwenkrahmen 123.

Eine weitere Verschwenkmöglichkeit ergibt sich über ein Drehlager, welches etwa mittig am Vertikalschwenkrahmen 123 angreift und mit 125 bezeichnet ist. Das Drehlager 125 lagert einen Halbbrückenträger 126, wobei im übrigen darauf hingewiesen wird, daß ab diesem Moment die Darstellung der Fig. 15 eine Verdrehung um $90^{\circ}$ erfahren hat, d.h. mit anderen Worten, der Halbbrückenträger 126 müßte sich in einer Vertikalebene senkrecht zur Zeichenebene erstrecken, wobei dann der ganze Tacker in seiner Vertikalerstreckung nach unten hängt. Der Halbbrückenträger 126, der in seiner Verschwenkbewegung dafür sorgen kann, daß die eine endliche Breitenerstreckung in einer horizontalen Ebene aufweisende Tackermündung formgetreu den diese Horizontalebene verlassenden und wieder zurückkehrenden Erhebungen der Trägerunterseite folgen kann, ermöglicht also eine Drehbewegung der Tackerlagerung um eine horizontale Drehachse. Im vorderen Endbereich befindet sich dann, wie mit 127 angedeutet, eine weitere, vertikale Drehachse, die eine horizontale Trägerplatte 128 der Tackerlagerung zur Verschwenkung in einer horizontalen Ebene trägt. Dies ist die letzte Verschwenkmöglichkeit, so daß sich insgesamt zwei Gleitverschiebemöglichkeiten in horizontaler und vertikaler Richtung sowie drei Schwenklager für die Tackerlagerung insgesamt ergeben, d.h. fünf Freiheitsgrade, in denen sich die Tackermündung bewegen kann, um dem vorgeschriebenen und auch abgetasteten Träger-Randkantenverlauf getreu zu folgen.

In diesem Zusammenhang der Schwenklagerungen sei noch darauf hingewiesen, daß sämtliche Schwenklager über Brems- und Feststelleinrichtungen verfügen, die jeweils nach Beendigung eines zyklischen Nagelumlaufs die letzte Position des Tackers fixieren, wobei jedoch während des Nagelvorgangs die Bremseinrichtungen vollständig freigegeben sind, so daß der Tacker sich, lediglich geführt von seinen weiter unten noch zu erläuternden Abtasteinrichtungen, vollkommen frei in seinen Lagerungen bewegen kann. Diese Bremseinrichtungen bestehen vorzugsweise bei dem dargestellten Ausführungsbeispiel aus Halbkreisscheiben 127a für die letzte Verschwenkmöglichkeit 127, sowie 125a für die vorhergehende Verschwenkmöglichkeit bei 125.        Die Scheiben sind an dem jeweils durch die Verschwenklagerung verdrehbaren Teil befestigt und laufen durch eine vorzugsweise hydraulisch, gegebenenfalls aber auch elektrisch antreibbare, zugeordnete Bremszylindereinrichtung 129 bzw.130, die über eine vorzugsweise schwimmend gelagerte und die jeweilige Bremsscheibe beidseitig erfassende Arretiereinrichtung 129a, 130a verfügt.    Diese Arretiereinrichtungen pressen einen Stößel gegen die Bremsscheibe, so daß diese beidseitig festgehalten ist ohne weitere Verschwenkmöglichkeit. Die Bremsscheibenarretierung für die Verschwenkung in der horizontalen Schwenklagerachse 122 (senkrecht zur Schwenklagerung 125) ist aus Übersichtlichkeitsgründen nicht dargestellt.

Auf die spezielle Ausführungsform der an der Trägerplatte 128 nunmehr in sämtlichen erforderlichen Bewegungsrichtungen frei verschiebliche und verschwenkbare Tackereinrichtung braucht nur noch so weit eingegangen werden, wie zum Verständnis vorliegender Erfindung erforderlich; die Tackereinrichtung umfaßt an erster Stelle den mit 131 bezeichneten Tacker von beispielsweise handelsüblicher Form, der in seiner Halterung 132 eingesetzt und dort festgespannt wird. Die Halterung 132 ihrerseits ist so ausgebildet, gelagert und von beidseitigen Arbeitszylindern 133 angetrieben, daß sie für jeden Schuß, den der Tacker setzt, eine schnelle Hubbewegung nach oben und unten durchführen kann; der Tacker hebt also bei vorliegender Erfindung nach jedem Schuß ab, läuft in die neue Schußposition, die zur ersten auch gestaffelt und versetzt sein kann, ein, schiebt seine Mündung unter der Wirkung der Arbeitszylinder 133 auf die nach unten um den Träger herumgefaltete und nach innen abgelegte Bezugsstoff-Randkante heran und schießt einen weiteren Nagel oder eine weitere Klammer ein. Anschließend hebt er wieder ab. Über die Träger/ Bolzenverbindung 134 ist diese Tackerlagerung ortsfest an der Lagerplatte 128 angebracht.

Zum Antrieb der Form längs des radial um den Umfang der Form 109 auskragenden Horizontal-Ringflansches 109b ist der Tackereinrichtung eine Motoreinrichtung 135 zugeordnet, die über eine Gleitbuchse 136 am Vertikalstab 137 der Tackerlagerung gehalten ist. Die Achse des Antriebsmotors 135 durchsetzt das vorzugsweise beidseitig angeordnete Lagersystem 134' und lagert selbst ein Antriebsritzel 138, welches unter Druckwirkung auf die Oberfläche des Horizontalflansches 109b der Form 109 angepreßt wird. Von unten erzeugen zwei mitlaufende Fixierräder 139 den erforderlichen Gegendruck, wobei diese beiden Rädern 139 zwischen sich eine Leitausbuchtung 140 am Horizontalflansch 109b aufnehmen und so dafür sorgen, daß sich die Tackermündung immer in einer einwandfreien Abstands- und Führungsbeziehung zu dem Bereich der Trägerunterkante befindet, in welchen die Nägel oder Klammern gesetzt werden sollen. Die Anpreßwirkung erzeugt ein Arbeitszylinder 141, der anfänglich auch dafür sorgt, daß sich die Abstandsbeziehung zwischen dem Antriebsritzel 138 und den Leiträdern 139 öffnet - durch Hochfahren der gesamten motorischen Antriebseinrichtung -. An dieser nach oben verschieblichen motorischen Antriebseinrichtung ist schließlich noch ein Sensorrad 141 befestigt, welches frei drehbar ist und auf der Oberfläche der Form 109,     wie gezeigt, mitläuft; die Drehgeschwindigkeit des Sensorrädchens 141 wird jedoch von einem vorzugsweise induktiv arbeitenden Sensor 144 als Taktgeber erfaßt und bestimmt die Schußabfolge des Tackers. Hierdurch ist gewährleistet, daß der Schnellschußtacker aufgrund dieser Schuß-Folgesteuerung auch in Kurven und um scharfe Ecken einen konstanten Klammerabstand beim Fixieren der Randkante des Bezugsstoffes setzt. Man erkennt auch, daß der Tacker, genauer gesagt die Tackereinrichtung, die an der Lagerplatte 128 gehalten ist, die Sitzkontur automatisch abtastet, wobei für einen Umlauf eine Überlappung von ein bis zwei Klammern berücksichtigt sind.

Ergänzt wird die Tackereinrichtung schließlich noch durch eine Beschneideinrichtung 143, die ortsfest an der Tackerlagerung befestigt ist und im einfachsten Fall aus einem Arbeitszylinder 144 besteht, dessen Kolbenstange 145 eine eine bestimmte Breite aufweisende Schneide 146 lagert. Es ist festgestellt worden, daß durch eine besonders schnelle Hubbewegung, bewirkt durch den Arbeitszylinder 144 mit Anschlag an die Trägerunterkante, parallel oder geringfügig nachgestellt zur Tackermündung ein wirkungsvolles und einwandfreies Abschneiden der dann noch überstehenden Bezugsstoff-Randkante möglich ist.

Weiterhin wurde festgestellt, daß sich das endgültige Umlegen und feste Anpressen der Bezugsstoff-Randkante an die Trägerunterseite am besten durch Blaslufteinwirkung vornehmen läßt, wobei angrenzend und verteilt um die Tackermündung im Grunde beliebige Düsen angeordnet sein können, wovon     in der Darstellung der Fig.15 lediglich eine Düse 147 gezeigt ist, die einen Luftstrahl in Richtung des Pfeils 148 erzeugt, der bei dieser Düse genau unter die Träger-Randkante gerichtet ist. Da der Tacker nach jedem Schuß nach unten fährt, wird so die Einwirkung der Blasluft aus der hinter der Tackermündung angeordneten Düsenöffnung freigegeben, wobei der Tacker im nächsten Moment wieder nach oben fährt und den nachfolgenden Schuß setzt. Bevorzugt sind vorlaufend zur Tackermündung noch weitere Düsen angeordnet, wobei wiederum bevorzugt festgestellt worden ist, daß sich die besten Wirkungen der Blasdüsen dann ergeben, wenn die Blasluft intermittierend, also stoßweise zugeführt wird. Durch dieses ruckhafte, stoßweise Aufblasen mit Unterbrechungen, welches selbstverständlich in schneller Abfolge geschieht, läßt sich die Bezugsstoff-Unterkante einwandfrei umlegen und annageln. Ein ständiges Blasen kann nämlich zur Ausbildung von Unterdruckbereichen führen, die dann gegebenenfalls eine umgekehrte Wirkung haben, nämlich den Stoff von der Träger-Unterkante abheben.

Nach dem Umlauf des Tackers, genauer gesagt, nachdem der stationär gehaltene Tacker die Form 109 mit Träger 101 unter ständiger Nagelung einmal um 360$^{\circ}$ um ihre Achse angetrieben hat, fährt der Schußarm mit Tacker in seine Ausgangs-Ruheposition zurück.

Der Arbeitsablauf bei diesem erfindungsgemäßen Polsterautomat ist daher wie folgt:

1. Der Sitzträger 101 wird, vorzugsweise sofort mit aufgeklebtem
   Schaum-Polsterkissen 102 in die Aufnahmevorrichtung eingelegt,
   also auf die Trägerplatte 103 aufgelegt, wobei die umgebende
   Tischplatte 105 in etwa höhenbündig mit der Polsterauflage abschließt.

2. Der Bezugsstoffzuschnitt wird aufgelegt; dies wird erleichtert
   durch die um die Aufnahmevorrichtung angeordnete Tischplatte, die ferner Markierlinien aufweist, die dem jeweiligen
   Stoffzuschnitt entsprechen. Dadurch kann mit kleinstmöglichem Zuschnittsmaß gearbeitet werden.

3. Durch Auslösen einer "Starttaste", beispielsweise durch
   Zweihandeinrückung, wird der Bespannvorgang ausgelöst,
   es fahren also zunächst die in der Mitte offene Ringbürste
   und anschließend die Form nach unten, wobei die zeitliche
   Abfolge zwischen der Arbeitsphase II und III auch so gestaltet
   sein kann, daß die Ringbürste für einen kurzen Moment in
   der untersten Eingriffsposition mit der Bezugsstoff-Randkante noch verharrt, bis die Form mit ihrem Ringflansch
   übernommen hat, und erst dann vollständig nach unten durchfährt.

4. Durch erneute Auslösung oder auch automatisch wird der
   Schußarm mit dem Tacker an die Sitzkante herangefahren.
   Der Schußarm ist bei dem dargestellten Ausführungsbeispiel
   als die Tackereinrichtung beidseitig lagernde, käfigartige, Verstell- und Verschwenkbewegungen ermöglichende Rahmenkonstruktion ausgebildet. Da der Tacker aufgrund der Brems-Arretieranordnungen, die sofort nach Beendigung des vorhergehenden Nagelvorgangs einsetzen, **seine Endposition bezüglich** der Form-Randkante beibehalten hat, ist der erneute Eingriff problemlos.

5. Durch Betätigung einer Taste "Umlauf" treibt der Tackermotor 135 die Form mit Sitzträger an und die Bezugsstoff-Randkante wird angenagelt.

6. Nach durchgeführtem Umlauf unter Berücksichtigung einer Überlappung von ein bis zwei Klammern fährt der Schußarm mit dem Tacker automatisch in die Ausgangsposition zurück.

7. Bis zu diesem Zeitpunkt war der Sitzträger mit Polster und Bezugsstoff von unten von der Trägerplatte und dem Trägerrohr 104 und von oben von der Form 109 gehalten. Diese Form kann sich jetzt entweder alternativ öffnen oder sie stößt den fertig gepolsterten Sitz automatisch aus und fährt in ihre oberste Ausgangsposition zurück.

8. Gleichzeitig oder nachfolgend zu dieser Rücklaufbewegung der Form fährt die Ringbürste, nämlich der die Ringborstenform aufweisende Bezugsrahmen in seine obere Ausgangsposition und hebt durch seine nach innen stehenden Borstenbündel den Sitzträger von der Trägerplatte 103 ab und nimmt ihn zur Entnahme weiter nach oben.

0071693

9. Gleichzeitig hiermit oder zeitlich nachfolgend kehrt auch der Tisch in seine Ausgangsposition zurück, so daß die Aufnahmevorrichtung wieder für das Einlegen des nächsten Sitzteils mit Polster frei ist.

Die Bedienungsperson kann daher den neuen Sitzträger sofort einlegen, nimmt beim Zurückziehen der Hände aus dem darüber angeordneten Bezugsrahmen 108 den fertig gepolsterten Sitz ab, legt ihn zur Seite, ergreift einen neuen Bezugsstoffzuschnitt und legt diesen auf den Tisch auf. Die erfindungsgemäße Vorrichtung ist, wie Versuche ergeben haben, daher in der Lage, jeweils in einem Zeitraum zwischen 45 Sekunden und einer Minute, genau innerhalb von 47 Sekunden, jeweils einen fertigen Sitz zu polstern.

Bevor im folgenden noch auf die bevorzugten Ausgestaltungen vorliegender Erfindung anhand der Darstellungen der Fig. 16, 17a, 17b, 18 und 19 eingegangen wird, sei darauf hingewiesen, daß kinematische Umkehrungen des erfindungsgemäßen Polstervorgangs innerhalb des erfindungsgemäßen Rahmens liegen, beispielsweise die einfache Maßnahme, das ganze Gestell sozusagen umzudrehen, so daß von unten nach oben gearbeitet wird, mit anderen Worten, die Hauptbezugskomponenten Bezugsrahmen und Form bewegen sich beim Polstervorgang von unten nach oben. Insofern sind daher auch die in der bisherigen Beschreibung verwendeten Begriffe "unten" und "oben" relativ und in diesem Sinne zu verstehen. Ferner ist es auch vorstellbar, den Beziehvorgang bis zum Aufbringen der Form auf den Träger mit dazwischengespanntem Bezugsstoff in der weiter vorn ausführlich geschilderten Art und

/48

Weise durchzuführen, dann aber das Ganze umzudrehen und von oben zu nageln.

Ein weiterer Hinweis bezieht sich auf die verschiedenen, weiter vorn dargestellten Antriebsmöglichkeiten; hier können anstelle der verwendeten Arbeitszylinder selbstverständlich auch andere Systeme eingesetzt werden, die auch auf elektrischer Basis arbeiten, beispielsweise Hubmagneten u. dgl., aber auch eine Drehbewegung erzeugende Antriebsmotoren, deren Ausgangsdrehleistung durch entsprechende kinematische Glieder in transversale Verschiebebewegungen umgewandelt werden können. Die hier speziell verwendeten Arbeitszylinder können sowohl hydraulisch als auch pneumatisch angetrieben sein.

Das Ausführungsbeispiel der Fig.16 zeigt eine alternative Fallgestaltung für den Eingriff zwischen dem hutkrempenartigen Horizontalflansch 109b an der Form 109 und dem Antriebsritzel von der Tackereinrichtung. Bei dem Ausführungsbeispiel der Fig. 16 ist der Antriebsmotor 135' mit Antriebsritzel 138' insgesamt bei 150 schwenkbar gelangert. Daher kann bei diesem Ausführungsbeispiel das Antriebsritzel 138' zum Einklemmen des Form-Hutkrempenbereichs nach oben abschwenken und diesen dann unter Klemmwirkung festhalten und gleichzeitig antreiben. Die Verschwenkung kann mit Hilfe eines pneumatisch oder hydraulisch betriebenen Arbeitszylinders 151 erfolgen, aber auch dadurch, daß Antriebsmotor mit Antriebsritzel federbelastet sind. Das Anheben durch Verschwenken kann dann auch durch das Auflaufen auf eine ein entsprechendes Anheben bewirkende stationäre Nockenform beim Annähern der Tackereinrichtung an die Form erfolgen.

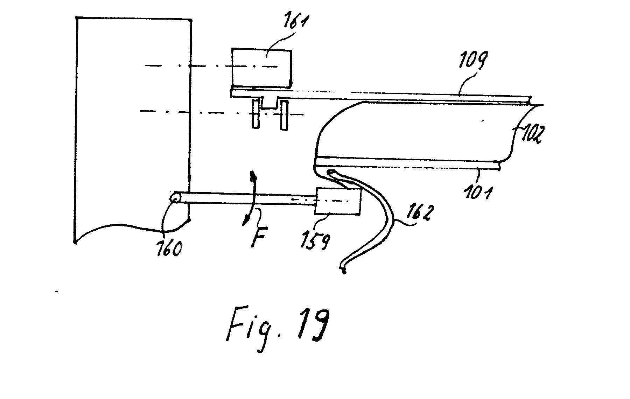

Die Ausführungsbeispiele der Fig. 17a, 17b einerseits sowie Fig. 18 andererseits beziehen sich auf weitere Möglichkeiten, den insofern zunächst nach unten überstehenden Bezugsstoff-Randkantenbereich nach innen umzulegen und so für den Tacker schußfertig zu machen. Bei dem Ausführungsbeispiel der Fig. 17a und 17b ist ein, vorzugsweise synchron zum Tackerhub gesteuertes Bürstchen oder ein sonstiges geeignetes Einstreifelement 152 vorgesehen, welches in Fig. 17a, 17b bei 152' auch in der vorgeschobenen Position gestrichelt noch dargestellt ist. Das Einstreifelement kann eine U-förmige Bürste sein, die, bei dem in Fig. 17a dargestellten Ausführungsbeispiel angetrieben von zwei Arbeitszylindern 153a, 153b jeweils bei abgehobener Tackermündung von der Form aus gesehen nach innen fährt, die Bezugsstoffrandkante im als nächstem zugesehenen Schußbereich des Tackers an die Trägerunterseite andrückt und dann an dieser Stelle (bei 152') so lange verharrt, bis der Tacker den nächsten Schuß gesetzt hat. Mit dem Zurückweichen der Tackermündung wird auch das bürstenförmige Einstreifelement wieder zurückgezogen und erfaßt bei der vorzugsweise kontinuierlichen Weiterdrehung der Form beim nächsten Vorschubhub einen nachfolgenden Randkantenteilbereich.

In den Fig. 17a, 17b zeigen die Pfeile C die nach innen und außen gerichtete Hubbewegung des Einstreifbürstchens und der Pfeil D die hier vertikal gerichtete Hubbewegung des Tackers.

Unter Ausnutzung der Tackerhubbewegung erfolgt in der in Fig. 18 gezeigten vereinfachten Ausführungsform die Einstreifbewegung; zu diesem Zweck ist an einem Hebel 154 der bei 155 schwenkbar gelagert ist, ein weiteres Einstreifelement befestigt, auch hier wieder in Form eines mehr oder weniger breiten Bürstchens 156. Der Hebel 154 mit dem Einstreifbürstchen 156 befindet sich so im Weg des sich entsprechend dem Pfeil D nach oben und unten bewegenden, nur schematisiert dargestellten Tackers 157, das ein am Tacker befindlicher Mitnehmer 158, vorzugsweise ein Rolle, an der insofern eine Nockenbahn bildenden Hebelrückfläche abläuft und den Hebel 154 zu einer Einschwenkbewegung entsprechend dem Doppelpfeil E veranlaßt. Man erkennt, daß hierdurch von dem Bürstchen 156 jeweils ein entsprechender, im Tackermündungsbereich liegender Bezugsstoff-Randkantenteil erfaßt und nach innen eingestreift wird, so daß der Tacker in der obersten Position, in welcher sich dann der Hebel 154 mit Bürstchen 156 im Tacker nach innen vorgelagert befindet, seinen Schuß setzen kann.

Eine weitere und insofern auf einen Nagelvorgang vollständig verzichtende Ausgestaltung vorliegender Erfindung ist schließlich noch in der Darstellung der Fig. 19 gezeigt. Bei diesem Ausführungsbeispiel erfolgt die Verbindung der Bezugsstoff-Randkante mit der Träger-Seitenkante oder -Rückfläche durch Verkleben, wozu eine Anpreßrolle 159 vorgesehen ist. Die Anpreßrolle kann in der in Fig. 19 gezeigten Position um einen Schwenkpunkt 160 entsprechend der Doppelpfeilrichtung F nach oben und unten verschwenkbar sein, entweder, um ständig erneut durch eine schnelle Hubbewegung während des Umlaufs eine Anpreßwirkung auszuüben, oder um einmalig nach oben verschwenkt zu werden und dann während des gesamten Umlaufs, der auch hier wieder mit Hilfe eines Antriebsritzels 161 erfolgt, in der Anpreßposition zu verharren. Das Umlegen der Bezugsstoffrandkante kann dabei entweder

/51

durch die bisher geschilderten Einwirkungsmöglichkeiten erfolgen (Blasluft, Einstreifer-Bürstchen) oder auch durch weitere, dem Befestigungsbereich vorlaufende Bürstchen, die zu ihrer Laufrichtung so weit schräg gestellt sind, daß sich eine Einklappwirkung auf den überhängenden Bezugskantenrand ergibt.

Das Verkleben erfolgt entweder durch unmittelbares Zuführen von Klebstoff über eine entsprechende Klebstoff-Zuführungseinrichtung 162, in Fig.19 lediglich schematisiert durch eine Rohrleitung dargestellt, unmittelbar vor der Preßrolle 159 oder auch dadurch, daß auf der Trägerunterseite der Klebstoff schon aufgebracht ist, so daß dieser nur noch aktiviert zu werden braucht. Zu diesem Zweck kann beispielsweise über die bei 162 dargestellte Rohrleitung vorab der Anpreßrolle Heißluft aufgeblasen werden.

**Dipl.-Ing. Peter Otte**
Patentanwalt

0071693

7250 Leonberg
Tiroler Straße 15
Telefon (07152) 45421 u. 44442

1608/ot/mü
21.12.1981

Herr Friedrich Martin, Hauptstr. 25,
7271 Nagold-Iselshausen

Patentansprüche

1. Verfahren zum automatischen Polstern oder Beziehen von Stuhlsitzen, Rückenlehnen, Sesseln, flächigen Teilen, Paneelen,
Trägern u.dgl., wobei ein Bezugsstoff auf den Träger aufgelegt,
unter Bewirkung eines Spannvorgangs an die Trägerrandkante
geführt und gegebenenfalls über eine elastische Zwischenlage
(Polster) gespannt, an diesem befestigt wird, dadurch gekennzeichnet, daß zur Vorfixierung der Bezugsstoffrand durch einen
von oben nach unten einwirkenden Bürstvorgang an mindestens
einer Stelle über dem Umfang des Trägers nach unten auf den
Träger und anschließend um die Trägerrandkante herum gebürstet,
in eine vorläufige Halteposition gebracht und anschließend befestigt wird.

2. Verfahren nach Anspruch 1, dadurch gekennzeichnet, daß die
Bezugsstoffrandkante über ihrem gesamten Umfang gleichzeitig
von einem ringförmigen, geschlossenen Borstenbündel erfaßt

/2

und durch die Relativbewegung zwischen dem Borstenbündel und dem Träger vorfixiert wird.

3. Verfahren nach Anspruch 1 oder 2, dadurch gekennzeichnet, daß zur Befestigung des Bezugsstoffrandes am Trägeraußenrand dieser angeschossen oder verklebt wird, wobei von einer Andruckrolle ein Preßdruck zur Verklebung ausgeübt wird.

4. Verfahren nach einem der Ansprüche 1 bis 3, dadurch gekennzeichnet, daß zur Vorfixierung die Bürst- oder Niederstreifelemente den Bezugsstoffrand mit gesonderten Halteelementen unterhalb des Trägers in Wirkverbindung bringen oder selbst die Funktion der Halteelemente dadurch übernehmen, daß sie bis zur endgültigen Befestigung des Bezugsstoffs unterhalb des Befestigungsbereichs bei Aufrechterhaltung des Wirkungseingriffs mit diesem nach dem Überstreifvorgang stehen bleibt.

5. Verfahren nach einem der Ansprüche 1 bis 4, dadurch gekennzeichnet, daß zum Spannen des Bezugsstoffs zunächst ein Bezugsrahmen (8) in Form einer Ringbürste nach unten gefahren wird, wobei nach innen gerichtete Borstenbündel den aufgelegten Bezugsstoff ringsum erfassen und durch gleitenden Reibungseingriff unter gleichzeitiger Spanneinwirkung mitnehmen, daß anschließend eine Form nach unten auf den über den Träger gespannten Bezugsstoff gefahren wird, die den Bezugsstoff mindestens in seinem Randkantenbereich erfaßt und festhält, wobei gleichzeitig der Bezugsrahmen mit Ringbürste weiter nach unten geführt wird, derart, daß die Borstenbündel vom Bezugsstoffrand freikommen und daß anschließend der von der Form gehaltene
Bezugsstoffrand durch eine Relativverschiebung zwischen dem
Träger mit Form einerseits sowie einem Schnellnagler (Tacker)
andererseits am Träger befestigt wird.

6. Verfahren nach Anspruch 5, dadurch gekennzeichnet, daß zur
Bildung einer Aufnahmevorrichtung für den Sitzträger ein einen
mittleren Ausschnitt für diesen aufweisenden Tisch höhenbündig
mit Bezug auf eine Aufnahmeplatte hochgefahren wird, wobei
der Zuschnitt des Bezugsstoffes auf Sitzträger mit Polsterung
und Tisch unter Anlage an Markierlinien aufgelegt wird, daß
zunächst der Tisch nach unten und anschließend die Ringbürste
am nunmehr seitlich freien Sitzträger nach unten durchgefahren
wird, wobei die endgültige Freigabe der Bezugsstoff-Randkante
durch die Ringbürsten-Borstenbündel so lange verzögert wird,
bis die Bezugsstoff-Spannposition von der Form übernommen
und fixiert wird.

7. Verfahren nach Anspruch 5 oder 6, dadurch gekennzeichnet,
daß zur Durchführung der Relativbewegung zwischen Sitzträger
mit Form und Schnellnaglereinrichtung die letztere durch motorischen Eingriff mit einem Horizontalflansch der Form diese in
eine Drehbewegung versetzt, wobei gleichzeitig die Bezugsstoff-
Randkante durch den Tacker von unten angeschossen wird.

8. Verfahren nach einem oder mehreren der Ansprüche 1 bis 7,
dadurch gekennzeichnet, daß im Bereich der Tackermündung
aus mindestens einer Düse Dauerluft oder Blasluft intermittierend

/4

auf die nach unten durchhängende Bezugsstoff-Randkante geblasen wird und daß der Tacker nach jedem Schuß von der Träger-
Randkante (Trägerunterseite) abhebt und für den nächsten Schuß
wieder aufsetzt.

9. Verfahren nach einem oder mehreren der Ansprüche 1 bis 8,
dadurch gekennzeichnet, daß parallel zum Anschießvorgang
der Bezugsstoff-Randkante ein eine schnelle Hubfolge durchführendes Messer angrenzend zur Tackermündung so angetrieben wird, daß der angeschossene Bezugsstoffrand beschnitten
wird.

10. Verfahren nach einem oder mehreren der Ansprüche 1 bis 9,
dadurch gekennzeichnet, daß nach Umlauf des Tackers die den
Sitzträger mit Polster und Bezugsstoff haltende Form geöffnet
und der Sitzträger auf seiner Trägerplatte freigegeben wird,
woraufhin der Bezugsrahmen nach oben in seine Ausgangsposition zurückgeführt wird, im Durchlauf den fertig gepolsterten
Sitzträger abhebt und hierdurch die Trägerplatte freimacht
für das Einlegen des nächsten Sitzes.

11. Vorrichtung zum automatischen Polstern oder Beziehen von
Stuhlsitzen, Rückenlehnen, Sesseln, flächigen Teilen, Paneelen,
Trägern u. dgl., wobei ein Bezugsstoff auf den Träger aufgelegt und, gegebenenfalls über eine elastische Zwischenlage
(Polster) gespannt, an diesem befestigt ist, zur Durchführung
des Verfahrens nach einem oder mehreren der Ansprüche 1 bis
10, dadurch gekennzeichnet, daß an mindestens einer Stelle über den Umfang des auf den Träger aufgelegten Bezugsstoffes eine Bürsteinrichtung (5, 5a; 18, 21; 22, 24) vorgesehen ist, deren Borsten so gelagert sind, daß sie bei Durchführung einer relativen Vertikalbewegung zwischen Bürsteinrichtung einerseits und auf einem Tisch (16) gelagerten Träger (14) mit Polster (13) und Bezugsstoff (12) andererseits den Bezugsstoffrand unter ständiger Druck- und Reibungseinwirkung spannen und vorfixieren.

12. Vorrichtung nach Anspruch 11, dadurch gekennzeichnet, daß zur Vorfixierung Halteelemente als im Abstand zueinander angeordnete Spannstifte (17) ausgebildet sind, die an der unteren Randkante des den Träger lagernden Tisches (16) befestigt sind.

13. Vorrichtung nach Anspruch 11 oder 12, dadurch gekennzeichnet, daß die Borsten eine nach innen gerichtete geschlossene Ringform bilden und an einem ringförmigen Borstenträger (7) befestigt sind derart, daß an sämtlichen Stellen über den Umfang des Trägers bzw. des Bezugsstoffes die Borstenspannwirkung gleichzeitig erfolgt.

14. Vorrichtung nach Anspruch 11, dadurch gekennzeichnet, daß die Borsten (21) Teil einer am Umfang von Bezugsstoff und Träger örtlich lokal angreifenden Bürstrolle (18) sind, die mindestens einmal, vorzugsweise mehrfach über den Umfang des Trägers verteilt derart mit Bezug zu diesem gelagert ist, daß eine Drehbewegung der Bürstrolle ein vertikalen Vorbeistreichen ihrer Bürsten (21) zum Spannen des Bezugsstoffes bewirkt, wobei gleichzeitig Antriebsmittel vorgesehen sind zur
Bewirkung einer relativen Drehbewegung zwischen Träger (14)
und den jeweiligen Bürstrollen (18).

15. Vorrichtung nach Anspruch 11 oder 12, dadurch gekennzeichnet,
daß die Borsten bündelförmig an Schwenkhebeln (22) befestigt
sind, die über den Umfang des Tisches (14') anstehen und zur
Formateinstellung um Schwenkpunkte (23) nach innen und außen
in Anlage an die Trägerrandkante verschwenkbar und einstellbar sind, mit Fixiermitteln zur Arretierung der dem jeweiligen Format des Trägers entsprechenden neuen Schwenkposition.

16. Vorrichtung nach einem oder mehreren der Ansprüche 11 bis
15, dadurch gekennzeichnet, daß der Trägerrandbereich
und/oder die Bezugsstoffinnenfläche klebstoffbeschichtet
ist und eine zusätzliche Andruckrolle (33) vorgesehen ist,
gegebenenfalls geheizt für heißversiegelnde Klebstoffe.

17. Vorrichtung nach einem oder mehreren der Ansprüche 11 bis
15, dadurch gekennzeichnet, daß die von der Bürsteinrichtung
nach innen ragenden Bürst- oder Niederstreifelemente die Form
von Borsten, Fingern oder Schaumstofflippen aufweisen.

18. Vorrichtung nach einem oder mehreren der Ansprüche 11 bis
17, dadurch gekennzeichnet, daß die Bürsteinrichtung in Form
einer Ringbürste ausgebildet ist, die in zwei oder mehrere
Teile unterteilt ist, daß die jeweiligen Ringbürstenteile im
geschlossenen Zustand der Ringbürste von einem durchgedrück-

/7

ten Kniehebel gebildet bzw. in dieser Form gesichert sind und daß nach Beendigung des Überstreifvorgangs die Ringbürste durch Auflösen der durchgedrückten Kniehebel geöffnet wird und das bezogene Teil frei zugänglich ist.

19. Vorrichtung nach einem der Ansprüche 11 bis 18, dadurch gekennzeichnet, daß ein stationäres Lagergestell (112) vorgesehen ist, welches stationär eine Aufnehmevorrichtung (Trägerplatte 103) für den Sitzträger (101) sowie mit Bezug auf den Sitzträger verschieblich einen Bezugsrahmen (108) nach Art einer nach innen offenen Ringbürste sowie separat hierzu eine Form (109) lagert, die aufeinanderfolgend in Richtung auf den in die Aufnahmevorrichtung eingelegten Sitzträger (101) bewegbar sind.

20. Vorrichtung nach Anspruch 19, dadurch gekennzeichnet, daß die Aufnahmevorrichtung für den Sitzträger (101) von einer horizontalen, stationären Trägerplatte (103) gebildet ist, daß ein die Aufnahmevorrichtung für den Sitzträger (101) vervollständigender und den Sitzträger mit Polsterung (102) in etwa höhenbündig abschließender und umgebender Tisch (105) vorgesehen ist, daß der Tisch zur Einleitung des Bezieh- und Polstervorgangs bei stationärer Trägerplatte (103) vertikal nach unten verschieblich gelagert ist und daß in ebenfalls vertikal verschieblicher Lagerung der Bezugsrahmen (108) mit zentraler Durchtrittsöffnung für den stationären Sitzträger nach innen gerichtete, ringförmig angeordnete Borstenbündel (108a) aufweist, die bei der Relativverschiebung zwischen Sitzträger und Bezugsrahmen mindestens den Randkantenbereich des aufgelegten Bezugsstoffzuschnittes erfassen und einer Spannwirkung unterwerfen.

21. Vorrichtung nach Anspruch 19 oder 20, dadurch gekennzeichnet, daß die sich anschließend nach Durchlauf des Bezugsrahmens (108) auf den Sitzträger mit vorgespanntem Bezugsstoffzuschnitt absenkende Form (109) eine zum Träger komplementäre Ausbildung aufweist und über einen ersten peripheren, sich vertikal nach unten erstreckenden Ringflansch (110) verfügt, der Fixier- und Haltemittel (111) aufweist für die Übernahme des gespannten Bezugsstoff-Randbereichs von der Ringbürstenstruktur des vertikal nach unten durchlaufenden Bezugsrahmens (108).

22. Vorrichtung nach Anspruch 21, dadurch gekennzeichnet, daß die Form (109) einen zusätzlichen peripheren Horizontalflansch (109b) in Hutkrempen-Ringform aufweist, der der Führung und Orientierung der Schnellnageleinrichtung dient.

23. Vorrichtung nach Anspruch 21 oder 22, dadurch gekennzeichnet, daß die Haltemittel (111) am vertikalen Ringflansch (110) der Form (109) eine nach innen gerichtete Ringbürste, ein gegebenenfalls aufblasbarer Gummiwulst in Lippenform oder sonstige elastische und bündig an den vertikalen Randkantenverlauf des Bezugsstoffs angreifende Fixiermittel sind.

24. Vorrichtung nach einem der Ansprüche 11 bis 23, dadurch gekennzeichnet, daß seitlich angrenzend zur Aufnahme- und

/9

Spannanordnung für den Sitzträger an einem horizontal verfahrbaren Schußarm die Schnellnageleinrichtung (Tacker) gelagert ist und daß die Schnellnageleinrichtung einen motorischen Antrieb (35, 38) für die vom Sitzträger durchzuführende Drehbewegung aufweist.

25. Vorrichtung nach Anspruch 24, dadurch gekennzeichnet, daß die Schnellnageleinrichtung, nämlich Tacker mit Halterung und beiden zugeordnet der motorische Antrieb für den Sitzträger mit mindestens fünf Freiheitsgraden gelagert sind, nämlich einer ersten Lagerung zur horizontalen Gleitverschiebung in Richtung auf den Sitzträger, einer linearen höhenverschieblichen Lagerung und drei sich hieran anschließende Schwenklagerungen um zwei zueinander senkrecht stehende Horizontalachsen und eine Vertikalachse.

26. Vorrichtung nach Anspruch 25, dadurch gekennzeichnet, daß die jeweiligen linearen Gleitlager und Schwenkpunktlager (59, 65, 68) des Schnellnaglers (161) im wesentlichen rückstellfrei sind und mindestens einer Schwenklagerung Arretier- oder Bremsmittel (72, 75, 76; 73, 78, 79; 74, 80, 81) zugeordnet sind, die bei Abheben des Schnellnaglers (61) von der Trägerrandkante wirksam schalten und so den Schnellnagler in einer vom Träger bestimmten Endposition halten, die gleichzeitig den Ausgangspunkt für den nachfolgenden Nagelzyklus beim nächsten Träger bildet.

27. Vorrichtung nach Anspruch 26, dadurch gekennzeichnet, daß ein erster Hebelarm (56) vorgesehen ist, der zur Durchführung einer vertikalen Verschwenkbewegung in ortsfesten Bügeln (55) verdrehbar gelagert ist und an welchem in Richtung auf den Träger ein Querglied (Hohlrohr 60) angreift, welches eine verschiebliche Welle lagert, daß die verschiebliche Welle im Querglied (60) in Gleitführungen gehalten ist und unter der Wirkung eines pneumatischen oder hydraulischen Arbeitszylinders steht, der den Anpreßdruck des Schnellnaglers an die Trägerrandkante erzeugt.

28. Vorrichtung nach einem der Ansprüche 24 bis 27, dadurch gekennzeichnet, daß von oberen Schienen des Lagergestells (112) beidseitig horizontale Gleitlager gebildet sind, die vertikale Ansätze aufweisen zur vertikal verschieblichen Lagerung eines Brückengestänges, welches seinerseits über äußere Schwenklager (122) einen inneren Halbrahmen (123) in Brückenform lagert zur Verschwenkung um eine horizontale Achse, wobei der Halbrahmen (123) mittig ein weiteres Schwenklager (125) mit horizontaler Achse senkrecht zur ersten horizontalen Achse bildet, die einen festen Winkelhebel (126) lagert, an dessen Ende ein letztes Schwenklager (127) mit vertikaler Achse angeordnet ist, welches eine Lagerplatte (128) trägt, an welcher die Tackereinrichtung befestigt ist.

29. Vorrichtung nach Anspruch 28, dadurch gekennzeichnet, daß die Tackereinrichtung aus stationären Lagerteilen besteht, die über Arbeitszylinder eine Tackerhalterung zur intermittierenden Schußbewegung des Tackers lagern und daß ferner die Antriebseinheit für die Drehbewegung von Form (109) mit Sitzträger (101) vertikal derart, vorzugsweise über eine Gleitbuchsenlagerung (136) von stationären Gegenrollen (139) abhebbar ist, daß der Horizontalflansch (109b) mit einer ringförmigen Ausbuchtung (140) als Führungsmittel zwischen den Gegenrollen und einem oberen Antriebsritzel (138) einspannbar ist.

30. Vorrichtung nach einem oder mehreren der Ansprüche 11 bis 29, dadurch gekennzeichnet, daß ein frei auf der sich drehenden Form auflaufendes Sensorrädchen (141) zur Geschwindigkeitserfassung vorgesehen ist, welches im Bereich der Tackermündung angeordnet ist und synchron zu seiner Umdrehung eine Impulsfolge zur zeitlichen Schußfolgensteuerung des Tackers erzeugt.

31. Vorrichtung nach einem oder mehreren der Ansprüche 11 bis 29, dadurch gekennzeichnet, daß eine Beschneideinrichtung (143) vorgesehen ist, bestehend aus einem in schneller Abfolge intermittierend angesteuerten Arbeitszylinder (144), an dessen Kolbenstange eine Schneide (146) befestigt ist, die ständig gegen den überschüssigen Bezugsstoff-Randkantenteil auf der Trägerunterseite anschlägt und diesen abschneidet.

32. Vorrichtung nach einem oder mehreren der Ansprüche 11 bis 31, dadurch gekennzeichnet, daß zur Umlegung und Anpressen der überstehenden Bezugsstoff-Randkante (106a) Blasmittel (Düse 127) im Bereich der Tackermündung angeordnet sind, die einen intermittierend gesteuerten Luftstrom auf den Bezugsstoff-Randkantenbereich blasen.

33. Vorrichtung nach Anspruch 26, dadurch gekennzeichnet, daß die Brems- und Arretiermittel zur Einschränkung der freien Verschwenkbarkeit der Tackerlagerung aus kreissegmentartigen Bremsscheiben (127a, 125a) bestehen, die zwischen die Bremsscheiben jeweils umfassenden, einen Druckstößel aufweisenden Bewegungsanordnungen (129, 130) geführt sind.

34. Vorrichtung nach einem oder mehreren der Ansprüche 11 bis 33, dadurch gekennzeichnet, daß ausschließlich oder ergänzend zur Blasluftwirkung zum Einstreifen der überhängenden Bezugsstoff-Randkante Einstreifelemente (Bürstchen 152) vorgesehen sind, die vorzugsweise synchron zum Tackerhub eine nach innen gerichtete Bewegung durchführen.

35. Vorrichtung nach Anspruch 34, dadurch gekennzeichnet, daß das Einstreifelemet ein U-förmiges Bürstchen (152) ist, welches von mindestens einem Arbeitszylinder (153a, 153b) gesteuert die Einwärtsbewegung so durchführt, daß die Tackermündung in die U-Form des Bürstchens (152) in der Endhubposition jeweils den Schuß setzt.

**Fig. 1**

**Fig. 2**

Herr Friedrich Martin, 7271 Nagold 1 - Iselshausen

Fig. 3

Fig. 4

Fig. 5

Fig. 6

0071693

2/10

Fig. 7

Fig. 8a

Fig. 8b

Fig. 9

**Fig. 10**

**Fig. 11**

# FIG.12

# FIG.13

FIG. 14

# FIG. 15

0071693
9/10

Fig. 16

Fig. 17

Fig. 17a

Fig. 18

Fig. 19